# EUROPEAN PATENT APPLICATION

(11) **EP 2 444 969 A1**
(43) Date of publication of application: **25.04.2012**
(21) Application number: 11008276.5
(22) Date of filing: 13.10.2011
(51) Int. Cl.: G11B 7/24, G11B 7/258

(54) **Optical recording medium, method of producing same, and recording device**

(30) Priority: 19.10.2010 JP 2010234656
(71) Applicant: Sony Corporation, Tokyo 108-0075 (JP)
(72) Inventor: Sakamoto, Tetsuhiro, Tokyo 108-0075 (JP); Yamatsu, Hisayuki, Tokyo 108-0075 (JP); Miyamoto, Hirotaka, Tokyo 108-0075 (JP)
(74) Representative: Müller - Hoffmann & Partner

(57) **Abstract**

An optical recording medium includes a recording layer in which recording of a mark is selectively performed in a depth direction by irradiation of first light, and the mark is formed in multilayer form; and a reflection film reflecting second light of a wavelength different from a wavelength of the first light, and provided on a lower layer side of the recording layer.

## Description

### BACKGROUND

The present disclosure relates to an optical recording medium having a recording layer in which recording of a mark is selectively performed in a depth direction and the mark is formed in multilayer form, and a method of producing the optical recording medium. The present disclosure also relates to a recording device that performs mark recording on a recording layer of an optical recording medium.

As an optical recording medium on which recording and reproduction of signals are performed by optical irradiation, a so-called optical disc such as a CD (Compact Disc), a DVD (Digital Versatile Disc), and a BD (Blu-ray Disc: registered trademark), for example, is widespread.

As for an optical recording medium expected to be the next generation of the currently widespread optical recording medium such as a CD, a DVD, and a BD, the applicant of the present application has suggested an optical recording medium of a so-called bulk recording type (may be simply referred to as a bulk type) as described in Japanese Unexamined Patent Application Publications No. 2008-135144 and No. 2008-176902.

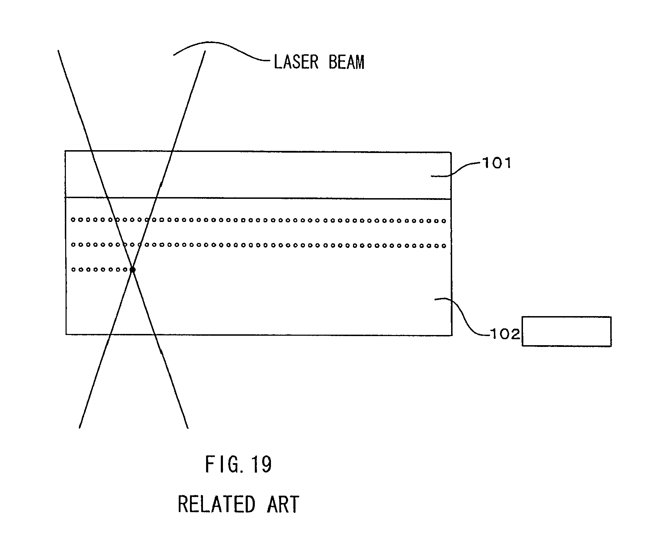

Here, the bulk recording is a technique of, for example as illustrated in FIG. 19, performing laser irradiation while sequentially changing the focal position, in an optical recording medium (a bulk-type recording medium 100) having at least a cover layer 101 and a bulk layer (recording layer) 102 carrying out multi-layer recording in a bulk layer 102, thereby achieving an increase in recording capacity.

As for such bulk recording, Japanese Unexamined Patent Application Publication No. 2008-135144 mentioned above discloses a recording technique called a micro-hologram method. In the micro-hologram method, a so-called hologram recording material is used as a recording material of the bulk layer 102. As the hologram recording material, for example, a photopolymerized polymer or the like is widely known.

Micro-hologram method is broadly divided into a positive-type micro-hologram method and a negative-type micro-hologram method. The positive-type micro-hologram method is a technique of forming a fine interference fringe (hologram) by condensing two opposed beams (a beam A and a beam B) at the same position, and making this fringe serve as a recorded mark. The negative-type micro-hologram method is based on an idea contrary to the positive-type micro-hologram method, and a technique of erasing a preformed interference fringe with laser irradiation, and making the erased part serve as a recorded mark. In this negative-type micro-hologram method, it is required to provide a process of forming an interference fringe in a bulk layer beforehand, as an initialization process.

The applicant has also proposed, as a technique of bulk recording different from the micro-hologram method, a recording technique of forming a void (a blank or a hole) as a recorded mark, as disclosed in, for example, Japanese Unexamined Patent Application Publication No. 2008-176902. The void recording method is a technique of recording a blank in the bulk layer 102, by subjecting the bulk layer 102 made of, for example, a photopolymerized polymer, resin, or the like to laser irradiation with a relatively high power. As described in Japanese Unexamined Patent Application Publication No. 2008-176902, a part where the blank is formed in this way is a part having a refractive index different from those of other parts in the bulk layer 102, and a reflectance of light at the boundary between them may be increased. Therefore, the blank part functions as a recorded mark, and this realizes information recording through formation of a blank mark.

In such a void recording method, a hologram is not formed and thus, recording may be accomplished by merely performing optical irradiation from one side. In other words, unlike the positive-type micro-hologram method, the recorded mark may not be formed by condensing two beams at the same position. Moreover, in comparison with the negative-type micro-hologram method, there is an advantage in that the initialization process may be eliminated. It is to be noted that Japanese Unexamined Patent Application Publication No. 2008-176902 describes an example in which optical irradiation for pre-curing before recording is performed when void recording is carried out, but the void recording is possible even when this irradiation of light for pre-curing is omitted.

Incidentally, although various kinds of recording techniques as described above have been proposed for the optical recording medium of the bulk recording type (may also be simply referred to as the bulk type), the recording layer (bulk layer) of such a bulk-type optical recording medium does not have an explicit multi-layered structure in a sense that more than one reflection film is formed, for example. In other words, in the bulk layer 102, a reflection film for each recording layer as in an ordinary multilayer disc, and a guiding groove are not provided. Therefore, when the structure of the bulk-type recording medium 100 illustrated in FIG. 19 remains as it is, focus servo and tracking servo may not be performed at the time of recording in which a mark is yet to be formed.

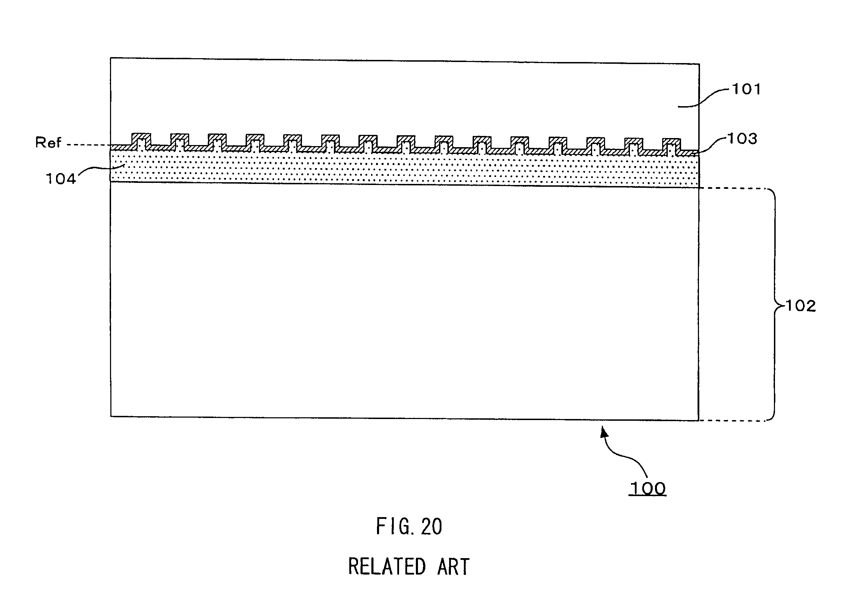

Hence, in practice, the bulk-type recording medium 100 is provided with a reflection surface (reference surface) having a position guiding element and serving as a reference as illustrated in FIG. 20. Specifically, for example, a spiral or concentric position guiding element (namely, a guiding groove in this case) is formed by formation of pits or a groove on the undersurface side of the cover layer 101, and a selective reflection film 103 is formed thereon. Subsequently, on a lower side of the cover layer 101 where the selective reflection film 103 is thus formed, the bulk layer 102 is laminated via an adhesive material such as UV curable resin, for example, serving as an intermediate layer 104 in the figure. Here, by forming the position guiding element (guiding groove) using the pits or groove as described above, absolute position information (address information) such as radius position information and rotation angle information, for example, is recorded. In the following, a surface where such a guiding groove is formed and the absolute position information is recorded (in this case, a surface where the selective reflection film 103 is formed) will be referred to as a "reference surface Ref".

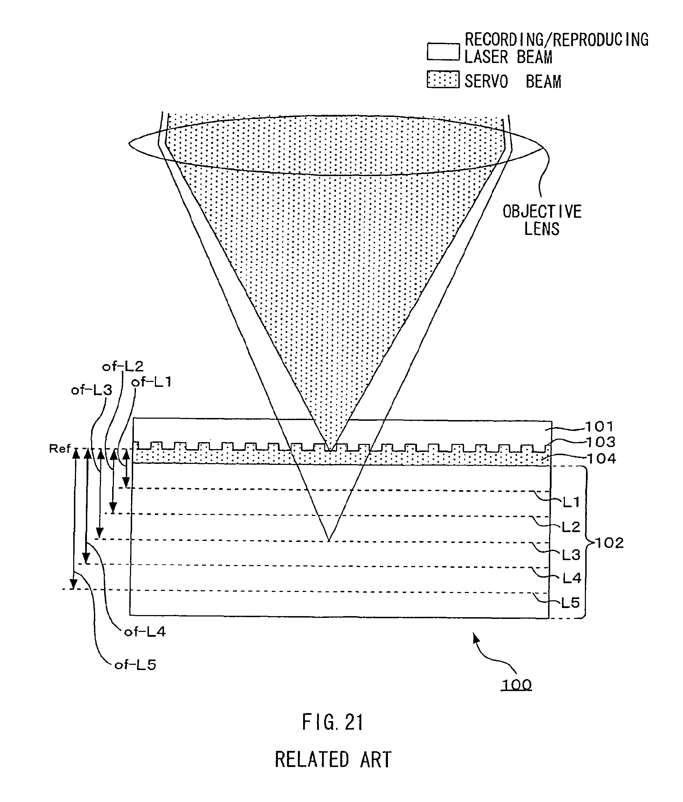

In addition, based on the medium structure as described above, the bulk-type recording medium 100 is irradiated with a servo laser beam (may also be simply referred to as servo light) serving as a laser beam for position control, aside from a mark-recording (or reproducing) laser beam (hereinafter may also be referred to as a recording/reproducing laser beam, or simply referred to as recording/reproducing light) as illustrated in FIG. 21. As depicted in the figure, these recording/reproducing laser beam and servo laser beam are applied to the bulk-type recording medium 100 through a common objective lens.

At the time, as the servo laser beam described above, a laser beam in a wavelength range different from that of the recording/reproducing laser beam is used. This is to separately detect reflected light of the servo laser beam from the reference surface Ref and reflected light of the recording/reproducing laser beam from the recorded mark, by using the difference between the respective wavelengths. To support this, as the reflection film formed on the reference surface Ref, the selective reflection film 103 having wavelength selectivity of reflecting the servo laser beam while allowing the recording/reproducing laser beam to pass therethrough is used.

Based on the above-described premise, operation at the time of mark recording in the bulk-type recording medium 100 will be described with reference to FIG. 21. First, when multilayer recording is to be performed on the bulk layer 102 with no guiding groove and no reflection film being formed, which position in a depth direction of the bulk layer 102 will be a layer position for recording a mark is determined beforehand. FIG. 21 illustrates an example of a case where, as the layer position (mark formation layer position, which may also be referred to as an information recording layer position) where the mark is to be recorded in the bulk layer 102, five information recording layer positions L in total, namely, a first information recording layer position L1 to a fifth information recording layer position L5, are set. As illustrated in FIG. 21, the first information recording layer position L1 is set as a position away from the selective reflection film 103 (the reference surface Ref) with the guiding groove being formed, by a first offset of-L1 in a focus direction (in the depth direction). Further, the second, third, fourth, and fifth information recording layer positions L2, L3, L4, and L5 are set as positions away from the reference surface Ref by second, third, fourth, and fifth offsets of-L2, of-L3, of-L4, and of-L5, respectively. It is to be noted that here, for convenience of illustration, there are five information recording layer positions L, but in practice, for example, several tens (for example, 20) of information recording layer positions L will be set at intervals of around 10 µm.

During recording in which a mark is yet to be formed, it is difficult to perform focus servo and tracking servo targeting each layer position in the bulk layer 102 based on the reflected light of the recording/reproducing laser beam. Therefore, focus servo control and tracking servo control of the objective lens at the time of recording are performed based on the reflected light of the servo laser beam, by making the spot position of the servo laser beam follow the guiding groove in the reference surface Ref.

However, it is required that the recording/reproducing laser beam reaches the bulk layer 102 formed on a lower layer side of the reference surface Ref for mark recording. For this reason, an optical system in this case is provided with, aside from the focus mechanism of the objective lens, a recording/reproducing light focus mechanism to adjust the focal position of the recording/reproducing laser beam independently. Specifically, as such a focus mechanism, an expander that changes the collimation of the recording/reproducing laser beam incident on the objective lens is provided. In other words, this focus mechanism thus changes the collimation of the recording/reproducing laser beam incident on the objective lens, thereby adjusting the focal position of the recording/reproducing laser beam independently of that of the servo laser beam.

Such a focus mechanism enables an adjustment to make the focal position of the recording/reproducing laser beam agree with the required information recording layer position L in the bulk layer 102, while the focus servo control of the objective lens is performed based on the reflected light of the servo laser beam from the reference surface Ref as described above. It is to be noted for confirmation that the position of the recording/reproducing laser beam in the tracking direction is controlled to be a predetermined position (a position right below the guiding groove formed in the reference surface Ref), by performing the tracking servo control of the objective lens based on the reflected light of the servo laser beam from the reference surface Ref.

Further, when reproduction is performed for the bulk-type recording medium 100 in which mark recording has already been carried out, the position of the objective lens may not be necessarily controlled based on the reflected light of the servo laser beam, unlike when the recording is performed. In other words, at the time of reproduction, the focus and tracking servo of the objective lens may be performed based on the reflected light of the recording/reproducing laser beam, by targeting a mark train formed in the information recording layer position L (may also be referred to as an information recording layer L at the time of reproduction) targeted for reproduction.

Here, as illustrated in FIG. 20 and FIG. 21, the existing bulk-type recording medium 100 is a medium in which the cover layer 101, the reference surface Ref (the selective reflection film 103), and the bulk layer 102 are formed in this order from a side where the plane of incidence of light is provided. In other words, the reference surface Ref (reflection surface) to obtain the reflected light of the servo laser beam for the purpose of performing the position control is formed on an upper layer side of the bulk layer 102.

At the time, considering a characteristic of a mark in terms of recording and reproduction in the bulk layer 102, it is desirable that the recording/reproducing laser beam enter the bulk layer 102 without loss. For example, when the above-described void recording method is adopted in particular, relatively large laser power to record a mark in the bulk layer 102 is desired, and the reflectance of the mark recorded in the bulk layer 102 is small and thus, the transmission factor for the recording/reproducing laser beam of the selective reflection film 103 is important, and approximately full transmission is ideal. Therefore, currently, a dielectric multilayer film excellent in wavelength selectivity is used as the selective reflection film 103.

### SUMMARY

In the existing bulk-type recording medium 100 as described above, the dielectric multilayer film excellent in wavelength selectivity is used as the selective reflection film 103, in order for the recording/reproducing laser beam to pass through and reach approximately 100% the bulk layer 102. However, under the present circumstances, the dielectric multilayer film is very expensive, causing an increase in product cost, which is not desirable. Moreover, in the case of using the dielectric multilayer film, it is difficult to appropriately control the film thickness of each dielectric film to obtain a desired characteristic, leading to a reduction in yields and a cost increase caused thereby, which are also not desirable.

It is desirable to allow a recording/reproducing laser beam to reach a bulk layer approximately without loss, while suppressing an increase in the product cost of a bulk-type optical recording medium.

According to an embodiment of the present disclosure, the following optical recording medium is provided. The optical recording medium includes a recording layer in which recording of a mark is selectively performed in a depth direction by irradiation of first light, and the mark is formed in multilayer form, and a reflection film reflecting second light of a wavelength different from a wavelength of the first light, and provided on a lower layer side of the recording layer.

Further, according to another embodiment of the present disclosure, the following method of producing an optical recording medium is provided. The method includes forming a reflection film on a lower layer side of a recording layer in which recording of a mark is selectively performed in a depth direction by irradiation of first light and the mark is formed in multilayer form. The reflection film reflects second light of a wavelength different from a wavelength of the first light.

Furthermore, according to another embodiment of the present disclosure, the following recording device is provided. The recording device performs recording in an optical recording medium. The optical recording medium includes a recording layer in which recording of a mark is selectively performed in a depth direction by irradiation of first light, and the mark is formed in multilayer form, and a reflection film reflecting second light of a wavelength different from a wavelength of the first light, and provided on a lower layer side of the recording layer. The recording device includes an objective lens upon which the first light and the second light are incident and which irradiate the optical recording medium with both the first light and the second light. The recording device further includes an objective-lens focus mechanism driving the objective lens in a focus direction. The recording device further includes a focal-position independent adjustment mechanism changing a collimation state of the first light incident upon the objective lens, thereby changing a focal position of the first light independently of that of the second light. The recording device further includes a focus-servo control section driving the objective-lens focus mechanism based on a focus error signal obtained by receiving reflected light of the second light from the reflection film, thereby performing focus servo control for the objective lens to focus the second light on the reflection film formed on the lower layer side of the recording layer. The recording device further includes a control section controlling the focal-position independent adjustment mechanism to adjust the focal position of the first light to be located in a recording target layer position in the recording layer formed on an upper layer side of the reflection film, and performing control to execute mark recording by the first light.

By providing the reflection film reflecting the second light (servo light) on the lower layer side of the recording layer (bulk layer) as described above, the recording layer may be irradiated with the first light (recording/reproducing light) approximately without loss. At the same time, by employing the structure in which the reflection film is provided on the lower layer side of the recording layer as described above, the reflection film may not be desired to keep the transmission factor for the first light at approximately 100%. Therefore, it is possible not to use the dielectric multilayer film used in the past, and employ a low-cost reflection film, for example, in a single-layer structure made of a metallic material (including alloy materials). It is to be noted for confirmation that the first light focuses on a target layer position in the recording layer at the time of reproduction of the mark, i.e., the reflection film is irradiated with the first light after the first light achieves focus. Therefore, an influence of the reflected light of the first light from the reflection film on the reflected light (reproducing light) of the first light from the mark may be reduced.

According to the above-described embodiments of the present disclosure, in the optical recording medium including the recording layer in which recording of the mark is selectively performed in the depth direction by irradiation of the first light, and the mark is formed in multilayer form, the recording layer may be irradiated with the first light approximately without loss, without using a reflection film with wavelength selectivity made of a dielectric multilayer film, as the reflection film reflecting the second light of the wavelength different from the wavelength of the first light. As a result, according to the above-described embodiments of the present disclosure, compatibility between irradiation of the recording layer with the first light approximately without loss and reduction in product cost of the optical recording medium is achieved.

In addition, according to the method of the above-described embodiment of the present disclosure, it is possible to produce the optical recording medium of the above-described embodiment of the present disclosure which produces such excellent effects. Moreover, according to the recording device of the above-described embodiment of the present disclosure, it is possible to perform mark recording appropriately by supporting the optical recording medium of the above-described embodiment of the present disclosure.

It is to be understood that both the foregoing general description and the following detailed description are exemplary, and are intended to provide further explanation of the technology as claimed.

### BRIEF DESCRIPTION OF THE DRAWINGS

The accompanying drawings are included to provide a further understanding of the disclosure, and are incorporated in and constitute a part of this specification. The drawings illustrate embodiments and, together with the specification, serve to explain the principles of the technology.

FIG. 1 is a cross-sectional structural diagram of an optical recording medium according to an embodiment.

FIG. 2 is a diagram for explaining a position control technique for the optical recording medium of the embodiment.

FIG. 3 is a diagram illustrating a variation characteristic of the reflectance of each wavelength for a film thickness (nm) of a reflection film made of a material containing silver as a main component (and a reflection film containing aluminum as a main component).

FIG. 4 is a diagram illustrating a variation characteristic of the reflectance of each wavelength for a film thickness (nm) of a reflection film made of a material containing copper as a main component.

FIG. 5 is a diagram illustrating a variation characteristic of the reflectance of each wavelength for a film thickness (nm) of a reflection film made of a material containing gold as a main component.

FIG. 6 is a diagram for explaining a variation characteristic of the reflectance of each wavelength for a film thickness (nm) of a reflection film made of an alloy.

FIGs. 7A to 7D are diagrams for explaining a method of producing the optical recording medium of an embodiment.

FIG. 8 is a diagram mainly illustrating a configuration of an optical system provided in a recording device of an embodiment.

FIG. 9 is a block diagram illustrating an internal configuration of the entire recording device of the embodiment.

FIG. 10 is a diagram illustrating a state in which a recording/reproducing laser beam is applied via an objective lens to focus on a lowermost information recording layer position, and reflected light of the recording/reproducing laser beam obtained from a bulk-type recording medium as a result is guided to a light receiving section.

FIG. 11 is a diagram illustrating a result of calculating a variation characteristic of "'stray light intensity/reproduction light intensity" for a distance from the lowermost information recording layer position to a reference surface, for every reflectance ratio between a reflectance of the reference surface Ref and a reflectance of a mark.

FIGs. 12A to 12C are diagrams illustrating intensity distribution patterns on the reference surface, an objective-lens outgoing surface (returning light side), and a light receiving surface, respectively, which are preconditions of calculation in FIG. 11.

FIG. 13 is a diagram for explaining occurrence of a difference between a spherical surface of reflected light from the lowermost information recording layer position and a spherical surface of reflected light from the reference surface.

FIG. 14 is a cross-sectional structural diagram of an optical recording medium according to a modification in which a guiding groove is formed on a bulk layer side.

FIGs. 15A to 15E are diagrams for explaining a method of producing the optical recording medium of the modification.

FIG. 16 is a cross-sectional structural diagram of an optical recording medium according to a modification in which a cover layer is omitted.

FIG. 17 is a cross-sectional structural diagram of an optical recording medium according to a modification in an adhesion structure is adopted.

FIG. 18 is a cross-sectional structural diagram of an optical recording medium according to a modification in which more than one semitransparent recording film is provided and multilayer recording is allowed.

FIG. 19 is a diagram for explaining a bulk recording method.

FIG. 20 is a diagram illustrating a cross-sectional structure of a bulk-type recording medium in practice provided with a reference surface, as an example.

FIG. 21 is a diagram for explaining a mark recording/reproducing technique for the bulk-type recording medium.

### DETAILED DESCRIPTION OF EMBODIMENTS

An embodiment of the present disclosure will be described below in detail with reference to the drawings. Incidentally, the description will be provided in the following order.
1. Optical Recording Medium of Embodiment
   1-1. Structure of Optical Recording Medium
   1-2. Specific Material of Reflection Film
   1-3. Method of Producing Optical Recording Medium
2. Configuration of Recording Device
   2-1. Configuration of Optical System
   2-2. Overall Internal Configuration of Recording Device
3. Discussion of Distance from Lowermost Information Recording Layer Position to Reference Surface, and Reflection Ratio
4. Modifications

### (1. Optical Recording Medium of Embodiment)

### (1-1. Structure of Optical Recording Medium)

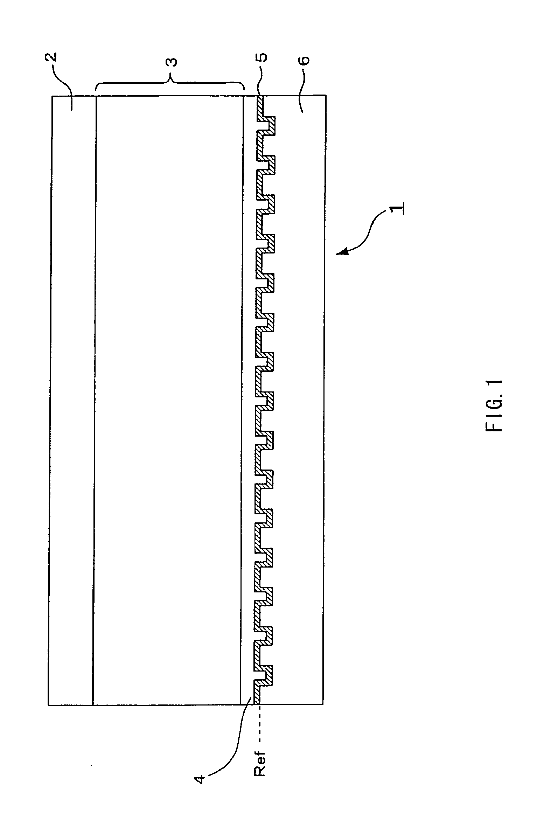

FIG. 1 illustrates a cross-sectional structural diagram of a bulk-type recording medium 1 serving as an example of the optical recording medium according to the an embodiment of the present disclosure. Here, the bulk-type recording medium is an optical recording medium in which so-called bulk recording is performed. The bulk recording refers to a technique of performing multilayer recording by emitting a laser beam to a bulk recording layer while changing a focal position sequentially, without adopting a multi-layered structure in which more than one record film is formed as in an ordinary multilayer optical disc.

In FIG. 1, the bulk-type recording medium 1 is assumed to be a disc-shaped optical recording medium which is irradiated with a laser beam by being driven to rotate, and thereby mark recording (information recording) in a bulk layer 3 is performed. Further, in reproduction of the recorded information, the bulk-type recording medium 1 is irradiated with a laser beam by being driven to rotate as well. It is to be noted that the optical recording medium is a generic name for recording media in which information is recorded and reproduced by optical irradiation.

As illustrated, a cover layer 2, the bulk layer 3, an adhesive layer 4, a reflection film 5, and a substrate 6 are formed in the bulk-type recording medium 1, in this order from the upper layer side. Here, in the present specification, the "upper layer side" refers to an upper layer side when a surface, upon which a laser beam is incident from the side where a recording device (a recording/reproducing device 10) described later is provided, serves as a top surface.

In addition, in the present specification, a term "depth direction" is used. This "depth direction" refers to a direction that agrees with a vertical direction in accordance with the above-mentioned definition of "the upper layer side" (namely, a direction parallel with an incident direction of the laser beam from the recording device side, i.e. a focus direction).

In the bulk-type recording medium 1, the cover layer 2 is made of, for example, resin, and functions as a protective layer of the bulk layer 3 serving as the recording layer.

The bulk layer 3 is formed on the lower layer side of the cover layer 2. As a material (a recording material) forming the bulk layer 3, a material assumed to be optimum may be adopted, depending on the method of bulk recording to be adopted, such as the micro-hologram method like the positive-type micro-hologram method or the negative-type micro-hologram method, and the void recording method described above, for example. It is to be noted that in the present disclosure, the method of mark recording for the bulk layer is not limited in particular, and an arbitrary method in the category of bulk recording method may be adopted. In the following, a case where the void recording method is adopted will be described as an example. When the void recording method is adopted, a material containing a resin as a main component is used as a recording material of the bulk layer 3.

The reflection film 5 is formed on the lower layer side of the bulk layer 3 via the adhesive layer (intermediate layer) 4 made of a required adhesive material. In the reflection film 5, a position guiding element to guide a recording/reproduction position is formed. The fact that the position guiding element is formed in the reflection film means that the reflection film is formed on an interface where the position guiding element is formed. Specifically, in this case, a groove or a pit train is formed on one surface side of the substrate 6 in the figure, and thereby a cross-section in a corrugated shape as illustrated in the figure is provided, and the reflection film 5 is formed on the surface of the substrate 6 provided with the cross-section in the corrugated shape. As a result, the position guiding element formed of the groove or the pit train is formed in the reflection film 5. By the groove or the pit train, information (absolute position information: radius position information and rotation angle information) representing an absolute position in a direction parallel with an in-plane recording direction of the bulk-type recording medium 1 is recorded. This absolute position information is recorded by a variation in meandering (wobble) period of the groove when the position guiding element is formed by using the groove, whereas when the position guiding element is formed by using the pit train, the absolute position information is recorded by a variation in pit length or a formation interval of pits.

Further, the substrate 6 is made of, for example, a resin such as polycarbonate or acrylic. The substrate 6 is generated by injection molding using a stamper provided with a corrugated cross-sectional shape to form the position guiding element.

Here, inside the bulk layer 3, neither a position guiding element nor a reflection film provided with the position guiding element is formed. As will be described later, the recording/reproduction position in the bulk layer 3 is controlled based on reflected light from the reflection film 5 where the position guiding element is formed. In this sense, the reflection film 5 (reflection surface) where the position guiding element is formed will be expressed as a reference surface Ref.

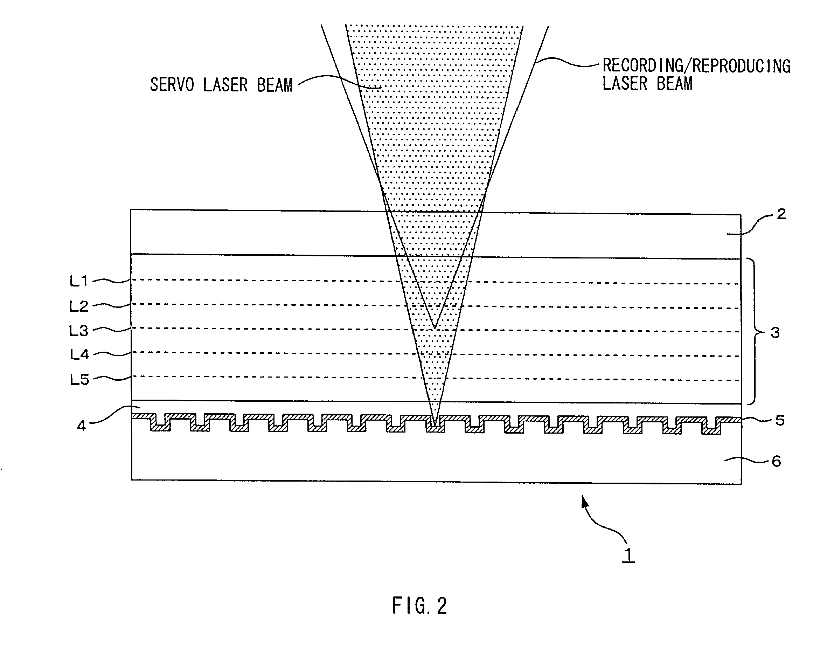

Incidentally, as in the case of the ordinary bulk-type recording medium 100, when multilayer recording is performed on the bulk layer 3 where neither the position guiding element nor the reflection film is formed, which position in a depth direction of the bulk layer 103 will be a layer position for recording a mark is determined beforehand. As illustrated in FIG. 2, like the case in FIG. 21, as the layer position (a mark formation layer position, which may also be referred to as an information recording layer position) where the mark is to be formed in the bulk layer 3, five information recording layer positions L in total, namely, a first information recording layer position L1 to a fifth information recording layer position L5 are set in this case as well. In this case, information about an offset of-L from the reference surface Ref to each of the information recording layer positions L is set in a controller 39 in the recording/reproducing device 10 to be described later. It is to be noted that herein also, there are five information recording layer positions L for convenience of illustration, but in practice, for example, several tens (for example, 20) of information recording layer positions L will be set at intervals of around 10 µn.

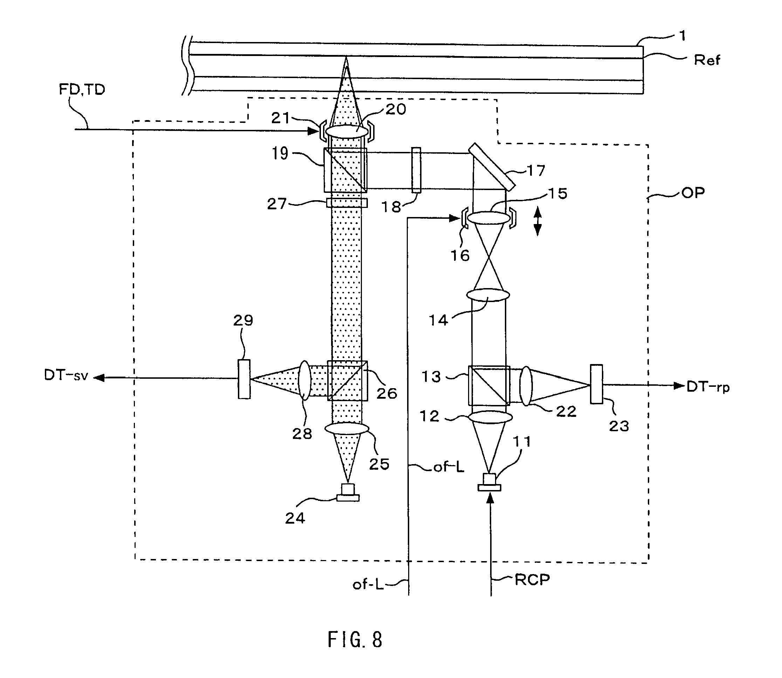

Further, as described earlier, in the bulk-type optical recording medium, the recording layer is irradiated with a laser beam (recording/reproducing laser beam) for recording/reproducing a mark, and a laser beam (servo laser beam) which is different from the recording/reproducing laser beam in terms of wavelength and used to perform position control based on the position guiding element in the reference surface Ref. FIG. 2 illustrates, as an example, a state of the recording/reproducing laser beam and the servo laser beam irradiated to the bulk-type recording medium 1, at the time of recording a mark targeting the information recording layer position L3 in the bulk layer 3. At the time of recording the mark, as illustrated in the figure, the servo laser beam is applied to focus on the reflection film 5 (the reference surface Ref) and focus/tracking servo of an objective lens is performed based on the reflected light of the servo laser beam from the reflection film 5. Subsequently, in this state, the focal position of the recording/reproducing laser beam is adjusted to agree with the desired information recording layer position L, and the mark is recorded at the desired position (in a focus direction and a tracking direction) in the bulk layer 3. As will be described later, the adjustment of the focal position of the recording/reproducing laser beam is performed by a recording/reproducing light focus mechanism (a group including a fixed lens 14, a movable lens 15, and a lens driving section 16 in FIG. 8).

It is to be noted that in the present example, the wavelength of the recording/reproducing laser beam is assumed to be around 400 nm, and the wavelength of the servo laser beam is assumed to be around 650 nm.

Here, as apparent from the above description, in the present embodiment, the reflection film 5 to obtain the reflected light of the servo laser beam for the position control at the time of recording is formed on the lower layer side of the bulk layer 3. Because the reflection film 5 is thus formed on the lower layer side of the bulk layer 3, the recording/reproducing laser beam irradiates the bulk layer 3 approximately without loss. At the same time, when there is provided such a structure that the reflection film 5 is formed on the lower layer side of the bulk layer 3, the transmission factor of the reflection film 5 for the recording/reproducing laser beam to pass therethrough need not be approximately 100% as in the case adopting the existing structure. Therefore, the reflection film 5 need not be the dielectric multilayer film used in the past, and a relatively low-cost reflection film made of, for example, a metallic material and having a single-layer structure may be employed as the reflection film 5. This reduces the cost of the material itself, as well as improving yields because the dielectric multilayer film is not used, thereby achieving a reduction in the cost. In this way, according to the present embodiment, it is possible to reduce the product cost of the bulk-type optical recording medium, while allowing the recording/reproducing laser beam to be irradiated to the bulk layer 3 approximately without loss.

It is to be noted for confirmation that at the time of reproducing a mark recorded in the bulk layer 3, the recording/reproducing laser beam is focused on the targeted information recording layer position L in the bulk layer 3, i.e., the recording/reproducing laser beam after being focused is applied to the reflection film 5. This reduces an influence of the reflected light of the recording/reproducing laser beam from the reflection film 5 on the reflected light (reproducing light) of the recording/reproducing laser beam from the recorded mark.

Here, techniques related to the optical recording medium according to the embodiment described above may include, for example, those described in Japanese Unexamined Patent Application Publications No. 2007-102185 and No. 2007-333766. These Japanese Unexamined Patent Application Publications No. 2007-102185 and No. 2007-333766 each describe a hologram recording medium available for recording a hologram (a hologram page) on a page-by-page basis. Specifically, Japanese Unexamined Patent Application Publication No. 2007-102185 describes the hologram recording medium having a structure based on "a first substrate 5 → a recording layer 4 → a filter layer 6 → a light absorbing layer 9 → reflection film 2 → a second substrate 1". Further, Japanese Unexamined Patent Application Publication No. 2007-333766 describes the hologram recording medium having a structure based on "a transparent substrate 70 → a hologram recording layer 60 → a gap layer 50 → a wavelength selection layer 40 → a gap layer 30 → a reflection layer 20 → a substrate 10". In other words, both employ the structure in which the reflective layer (the filter layer 6, and the wavelength selection layer 40) having wavelength selectivity is provided on the lower layer side of the recording layer. However, in the structures described in Japanese Unexamined Patent Application Publications No. 2007-102185 and No. 2007-333766, each of the filter layer 6 and the wavelength selection layer 40 is a layer required for the purpose of reflecting diffracted light from the hologram and returning the diffracted light as reproducing light to the device side, and is configured to allow servo light to pass therethrough. At the time, the diffraction efficiency of the hologram is approximately 1% and thus, each of the filter layer 6 and the wavelength selection layer 40 is configured to approximately totally reflect recording light (information light, or reference light) to obtain sufficient reproducing-light detection intensity (see [0005] and [0117] in Japanese Unexamined Patent Application Publication No. 2007-102185, [0023] in Japanese Unexamined Patent Application Publication No. 2007-333766, and the like). In addition, the recording medium in each of Japanese Unexamined Patent Application Publications No. 2007-102185 and No. 2007-333766 is a medium in which multilayer recording is not performed in the recording layer, and is different from the bulk-type optical recording medium in this respect.

### (1-2. Specific Material of Reflection Film)

A specific example of the material of the reflection film 5 will be described below. First, as a premise, reproduction of information recorded in the bulk layer 3 is performed by applying the recording/reproducing laser beam, and receiving the reflected light from a recorded mark (a void in the present example) obtained as a result on the recording/reproducing device 10 side to be described later.

At the time, according to the structure of the bulk-type recording medium 1 illustrated in FIG. 1, as described above, as long as the reproduction is performed by targeting a certain information recording layer position L in the bulk layer 3, the recording/reproducing laser beam is not applied in a just focus state to the reflection film 5, and the light after being focused is emitted. This reduces an influence of the reflected light of the recording/reproducing laser beam from the reflection film 5 on the reproducing light for the recorded mark.

However, in order to improve reproduction performance, it is desirable to be able to suppress the reflected light intensity of the recording/reproducing laser beam from the reflection film. For example, as for the reflected light of the recording/reproducing laser beam from the reflection film 5, it is conceivable to improve the reproduction performance by eliminating the influence thereof through signal processing. However, this may increase a burden on processing on the device side, which may result in a disadvantage of a decline in reproducing rate, for example. In this sense, for instance, it is desirable to be able to suppress the intensity of the reflected light of the recording/reproducing laser beam from the reflection film.

On the other hand, only when suppression of the reflected light intensity of the recording/reproducing laser beam is considered, it is possible to decrease the reflectance of the reflection film 5 by reducing the film thickness of the reflection film 5. However, when the film thickness of the reflection film 5 is reduced, the light intensity for the reflected light of the servo laser beam also becomes low, which may cause a degradation in signal quality of various error signals used to perform the servo control and as a result, it may be difficult to carry out the servo control stably.

Therefore, the constituent material of the reflection film 5 is selected in consideration of such a point. Specifically, there is selected a material having such a property that at least the reflectance for the servo laser beam is higher than the reflectance for the recording/reproducing laser beam (i.e., having wavelength selectivity of "servo laser beam > recording/reproducing laser beam" in reflectance). In addition, the smaller the quantity of the reflection light of the recording/reproducing laser beam be the better as described above and thus, the film thickness of the reflection film 5 needs to be set in consideration of this point. At the time, since the dielectric multilayer film used in the past has a complicated structure and is thus expensive, a metallic material feasible even having a single-layer structure is employed as a material having such wavelength selectivity.

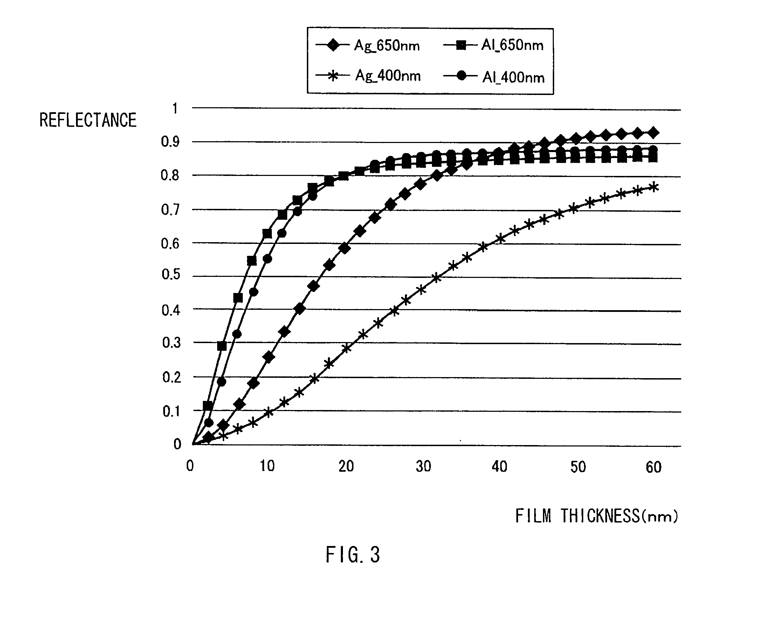

Here, silver (Ag) may be taken as an example of the metallic material having the wavelength selectivity described above. FIG. 3 illustrates a variation characteristic of the reflectance of each wavelength for the film thickness (nm) of the reflection film 5 made of a material containing silver as a main component. It is to be noted that FIG. 3 also illustrates a variation characteristic of the reflectance of each wavelength for the film thickness when the reflection film 5 is made of a material containing aluminum (Al) as a main component, which is commonly used as a reflection film of an optical disc. In FIG. 3, a horizontal axis is assumed to be the film thickness (0 nm to 60 nm), and a vertical axis is assumed to be the reflectance (0 to 1). As for the reflection film 5 based on silver, the reflectance for the laser beam having a wavelength of 400 nm is plotted with asterisks, and the reflectance for the laser beam having a wavelength of 650 nm is plotted with solid-filled diamonds. In addition, as for the reflection film 5 based on aluminum, the reflectance for the laser beam having a wavelength of 400 nm is plotted with solid-filled circles, and the reflectance for the laser beam having a wavelength of 650 nm is plotted with solid-filled squares.

First, as for the reflection film 5 based on aluminum, it is found that there is approximately no difference between the reflectance for the wavelength of 400 nm (recording/reproducing laser beam) and the reflectance for the wavelength of 650 nm (servo laser beam) even when the film thickness is varied.

In contrast, in the case of the reflection film 5 based on silver, it is found that compared to the case of employing aluminum, there is a difference between the reflectance for the recording/reproducing laser beam and the reflectance for the servo laser beam, overall. Such wavelength selectivity is obtained mainly due to wavelength dispersion of an extinction coefficient k among optical constants of silver. In this case, in a range of the film thickness of approximately 10 nm or more in particular, the difference between the reflectance for the recording/reproducing laser beam and the reflectance for the servo laser beam appears remarkably. At the time, it is found that
the difference between the reflectance for the recording/reproducing laser beam and the reflectance for the servo laser beam has a tendency to widen in a range of the film thickness up to around 30 nm, and has a tendency to shrink gradually in a range of the film thickness of around 30 nm or more.

As apparent from this FIG. 3, it is possible to realize a reflection film having the above-described wavelength selectivity, by providing the reflection film 5 made of a material containing silver as a main component. In other words, it is possible to realize a reflection film having such a property that at least the reflectance for the servo laser beam is higher than the reflectance for the recording/reproducing laser beam.

Here, sufficient wavelength selectivity may be assumed to be obtained, when the reflectance for the servo laser beam of the reflection film 5 is twice or more of the reflectance for the recording/reproducing laser beam. In other words, sufficient wavelength selectivity may be assumed to be secured if, when the reflectance for the servo laser beam of the reflection film 5 is Rsv and the reflectance for the recording/reproducing laser beam is Rrp, the ratio between these reflectances (hereinafter expressed as a reflectance ratio Rrp/Rsv) is 0.5 or less.

According to FIG. 3, in the case of the reflection film 5 based on silver, the reflectance ratio Rrp/Rsv ≤ 0.5 is achieved when the film thickness of the reflection film 5 is in a range of around 4 nm to around 20 nm. It is to be noted that a lower limit of the film thickness is naturally limited due to, for example, constrains in film formation technology or constrains such as a requirement to secure the reflectance Rsv to a certain degree for the stability of the servo and therefore, considering this point, a film thickness of around 20 nm or less may be defined as the film thickness to achieve sufficient wavelength selectivity.

At the time, the film thickness of the reflection film 5 becomes a factor affecting the reflectance ratio Rrp/Rsv between the servo laser beam and the recording/reproducing laser beam and at the same time, also becomes a factor affecting the absolute magnitude of the reflectance. Here, when the quantity of the reflected light of the recording/reproducing laser beam from the reflection film 5 is large, this increases the quantity of stray light, thereby causing degradation in quality of a reproduction signal. An influence of the stray light may be expressed simply as "Rsn/Rmk", when the quantity of the reflected light from the recorded mark is assumed to be Rmk, and the quantity of the reflection light regarded as the stray light is assumed to be Rns. The quantity Rns of the stray light may be regarded as being proportional to the reflectance Rrp of the reflection film 5 for the recording/reproducing laser beam, and thus, in order to suppress the influence of the stray light, the value of the reflectance Rrp may be made to be as small as possible, to be balanced against the reflectance Rmk of the mark.

In the case where the void recording method is adopted as in the present example, in relation with the reflectance Rmk of the void mark, the reflectance Rrp that may be assumed to be hardly influenced by the stray light is set to be around 0.3 or less, which is determined as one of indexes based on test calculation. According to FIG. 3, it is apparent that in order to meet such a condition of the reflectance Rrp ≤und 0.3, the film thickness of the reflection film 5 may be around 20 nm or less which is described above. In other words, based on the above-described condition of the film thickness being around 20 nm or less, wavelength selectivity sufficient for the reflection film 5 is obtained, and an effect of approximately no influence of the stray light is obtained.

Thus, according to the reflection film 5 made of a material containing silver as a main component, it is possible to realize a reflection film having the above-described wavelength selectivity. In addition, it is possible to have approximately no influence of the stray light, while securing sufficient wavelength selectivity, by setting the film thickness of the reflection film 5 appropriately. At the time, the film thickness is set also by considering that the reflected light quantity of the servo laser beam is desired not to be too small, in order to secure the stability of the servo as described above.

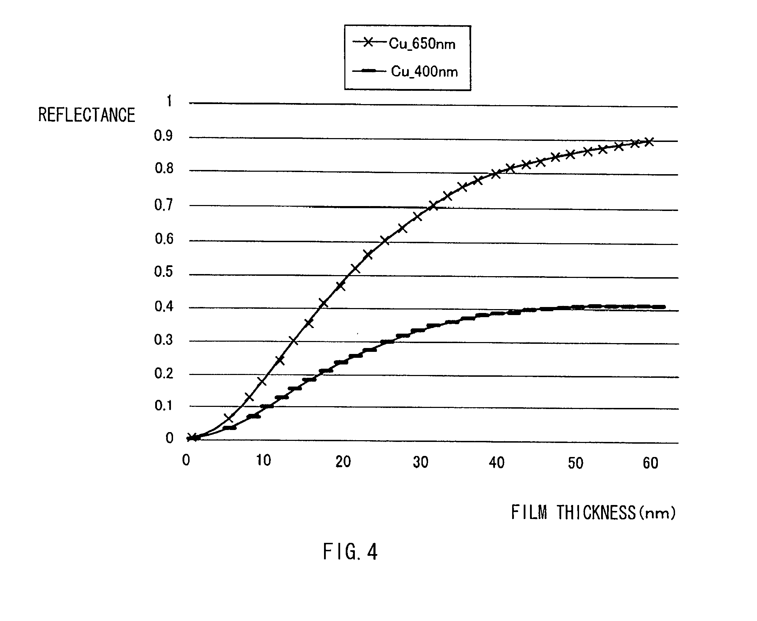

Further, copper (Cu) may be taken as an example of other metallic materials. FIG. 4 illustrates a variation characteristic of the reflectance of each wavelength for the film thickness (nm) of the reflection film 5 made of a material containing copper as a main component. In FIG. 4, a horizontal axis is assumed to be the film thickness (0 nm to 60 nm), and a vertical axis is assumed to be the reflectance (0 to 1). For the reflection film 5 based on copper, the reflectance for the laser beam having a wavelength of 400 nm is plotted with minuses, and the reflectance for the laser beam having a wavelength of 650 nm is plotted with crosses.

It is found that in the case of the reflection film 5 based on copper, a difference between the reflectance Rrp for the recording/reproducing laser beam and the reflectance Rsv for the servo laser beam occurs overall as well, compared to the case of using aluminum illustrated in FIG. 3. In particular, it is found that the difference between the reflectance Rrp for the recording/reproducing laser beam and the reflectance Rsv for the servo laser beam appears remarkably in a range of the film thickness of approximately 10 nm or more, in this case as well. Such wavelength selectivity of copper is obtained due to wavelength dispersion of an extinction coefficient k and wavelength dispersion of a refractive index n.

Deserving special note in the case of copper is that a tendency of the difference between the reflectance Rrp and the reflectance Rsv to widen is maintained even in the film thickness of 30 nm or more. When the film thickness is 60 nm, the difference between the reflectance Rrp and the reflectance Rsv is around "0.9 to 0.4", and the reflectance ratio Rrp/Rsv at this moment is approximately 0.45.

According to FIG. 4, in the case of copper, in order to meet the condition of the reflectance ratio Rrp/Rsv ≤.5 described above, the film thickness of the reflection film 5 may be set to be around 10 nm or more. However, as described above, when the film thickness is excessively large, the reflectance Rrp becomes too large, making the influence of the stray light also become great. For this reason, assuming that the condition of the reflectance Rrp ≤around 0.3 described above is also met, the film thickness of the reflection film 5 in this case is required to be set at around 10 nm or more and around 30 nm or less.

Thus providing the reflection film 5 made of a material containing copper as a main component also makes it possible to realize a reflection film having the above-described wavelength selectivity. In addition, by setting the film thickness of the reflection film 5 appropriately, it is possible to produce approximately no influence of the stray light while securing sufficient wavelength selectivity in this case as well. Further, the film thickness is set to the extent that the reflection light quantity of the servo laser beam does not become too small in this case as well.

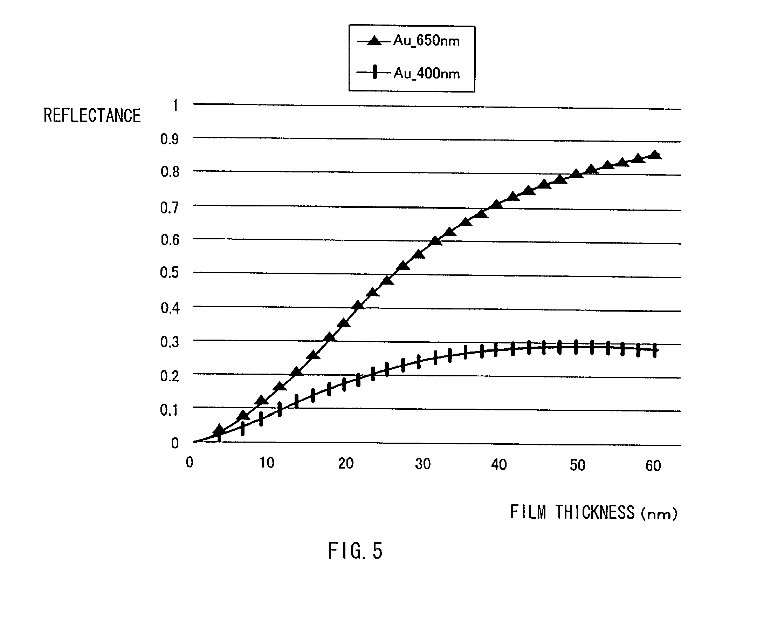

Furthermore, gold (Au) may also be taken as an example of other metallic materials. FIG. 5 illustrates a variation characteristic of the reflectance of each wavelength for the film thickness (nm) of the reflection film 5 made of a material containing gold as a main component. Like FIG. 3 and FIG. 4, a horizontal axis is assumed to be the film thickness (0 nm to 60 nm), and a vertical axis is assumed to be the reflectance (0 to 1). For the reflection film 5 based on gold, the reflectance for the laser beam having a wavelength of 400 nm is plotted with vertical bars, and the reflectance for the laser beam having a wavelength of 650 nm is plotted with solid-filled triangles.

It is found that in the case of the reflection film 5 based on gold, a difference between the reflectance Rrp for the recording/reproducing laser beam and the reflectance Rsv for the servo laser beam occurs overall as well, compared to the case of using aluminum illustrated in FIG. 3. The difference between the reflectance Rrp and the reflectance Rsv appears remarkably in a range of the film thickness of approximately 10 nm or more, in the case of gold as well. Moreover, like the case of copper, the difference between the reflectance Rrp and the reflectance Rsv has a tendency to widen even in the film thickness of 30 nm or more in this case as well. It is to be noted for confirmation that such wavelength selectivity of gold is also obtained due to wavelength dependence of an extinction coefficient k and a refractive index n.

According to FIG. 5, in the case of gold, in order to meet the above-described condition of the reflectance ratio Rrp/Rsv ≤ 0.5, the film thickness of the reflection film 5 may be set to be around 18 nm or more. Here, deserving special note in the case of gold is that the reflectance Rrp for the recording/reproducing laser beam does not exceed 0.3 even when the film thickness is large. In this regard, in the case of gold, the above-described condition of the reflectance Rrp ≤ around 0.3 need not be considered. As a result, in the case of gold, the film thickness to be set in order to meet both conditions is around 18 nm or more.

Providing the reflection film 5 based on gold in this way also makes it possible to realize a reflection film having the above-described wavelength selectivity and moreover, by setting the film thickness of the reflection film 5 to a predetermined value or more, it is possible to produce approximately no influence of the stray light while securing sufficient wavelength selectivity. In addition, by setting the film thickness to a predetermined value or more in this way, it is possible to secure the reflection light quantity of the servo laser beam, as well as ensuring the stability of the servo.

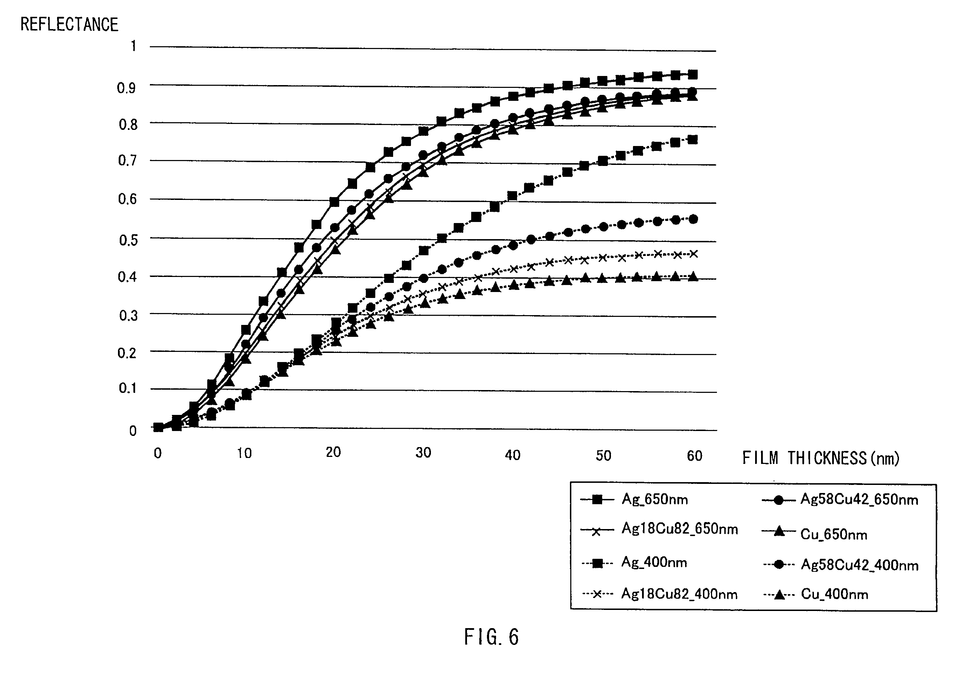

Still furthermore, an alloy may be employed as a material of the reflection film 5 to realize the above-described wavelength selectivity. FIG. 6 illustrates a variation characteristic of the reflectance of each wavelength for the film thickness (nm) of the reflection film 5 made of an alloy. In FIG. 6, a plot with solid-filled circles and crosses indicates the alloy, specifically, indicating a reflectance variation characteristic for the film thickness of the reflection film 5 made of the alloy of silver and copper. A plot with solid-filled circles indicates a reflectance variation characteristic when the atomic composition ratio between silver and copper is approximately 58:42, and plotted with crosses indicates a reflectance variation characteristic when this atomic composition ratio is approximately 18:82. Further, in this figure, for purposes of comparison, a plot with solid-filled squares indicates a reflectance variation characteristic for the film thickness of the reflection film 5 containing silver as a main component, and a plot with solid-filled triangles indicates a reflectance variation characteristic for the film thickness of the reflection film 5 containing copper as a main component. As illustrated, combination with a solid line is a reflectance variation characteristic for the servo laser beam (wavelength of 650 nm), and combination with a broken line is a reflectance variation characteristic for the recording/reproducing laser beam (wavelength of 400 nm).

It is found in FIG. 6 that in either of the recording/reproducing laser beam and the servo laser beam, the reflectance variation characteristic of the alloy of silver and copper = 58:42 (solid-filled circles) is approximately an intermediate characteristic between the characteristic in the case of the main component being silver (solid-filled squares) and the characteristic in the case of the main component being copper (solid-filled triangles). Further, it may be recognized that in either of the recording/reproducing laser beam and the servo laser beam, the reflectance variation characteristic of the alloy of silver and copper = 18:82 (crosses) is a characteristic closer to the characteristic of the main component being copper, compared to the characteristic in the case of the alloy of silver and copper = 58:42. In view of these points, it is apparent that the reflectance variation characteristic in the case of the alloy of silver and copper is obtained as being closer to the characteristic in the case of either silver or copper, whichever larger is contained as the main component.

In the case of thus employing the alloy of silver and a copper, it is possible to obtain, as the reflectance variation characteristic for both the recording/reproducing laser beam and the servo laser beam, the intermediate characteristic between the characteristic of the case where silver is the main component and the characteristic of the case where copper is the main component (i.e., the characteristic closer to that in the case of containing silver or copper as the main component, whichever is larger in content). As may be understood from this respect, it is possible to realize the above-mentioned wavelength selectivity, and sufficiently reduce the reflected light quantity of the recording/reproducing laser beam by adjusting the film thickness thereof, thereby producing approximately no influence of the stray light, in the case of the alloy of silver and copper as well. Specifically, in the case of the alloy of silver and copper = 58:42, the film thickness to meet the above-mentioned conditions of the reflectance ratio Rrp/Rsv ≤ 0.5 and the reflectance Rrp ≤ 0.3 is around 0.6 nm or more and around 22 nm or less. Further, in the case of the alloy of silver and copper = 18:82, the film thickness to meet these conditions is around 6 nm or more and around 24 nm or less. It is to be noted that the film thickness is set to the extent that the reflected light quantity of the servo laser beam is not too small.

Here, as described above, in the case where copper is the main component, the condition of the reflectance ratio Rrp/Rsv ≤ 0.5 is satisfied by setting the film thickness at around 10 nm or more. However, compared to the case where silver is the main component, it is difficult to make the reflectance ratio Rrp/Rsv small. On the other hand, in the case where silver is the main component, the condition of the reflectance ratio Rrp/Rsv is satisfied by setting the film thickness at around 20 nm or less as described above, but at this moment, reducing the film thickness causes a disadvantage in terms of storage reliability.

It is known that the alloy of silver and copper is excellent in storage reliability, and is advantageous in that the film thickness may be reduced thereby. When this point is considered, in the case of the alloy of silver and copper, in particular, in the case of the silver content is 50% or more, it is possible to realize the reflection film 5 excellent in storage reliability while maintaining the characteristic of silver (namely, the characteristic of being able to make the reflectance ratio Rrp/Rsv smaller), and bring about an advantage in the case of forming the film to be small in film thickness.

### (1-3. Method of Producing Optical Recording Medium)

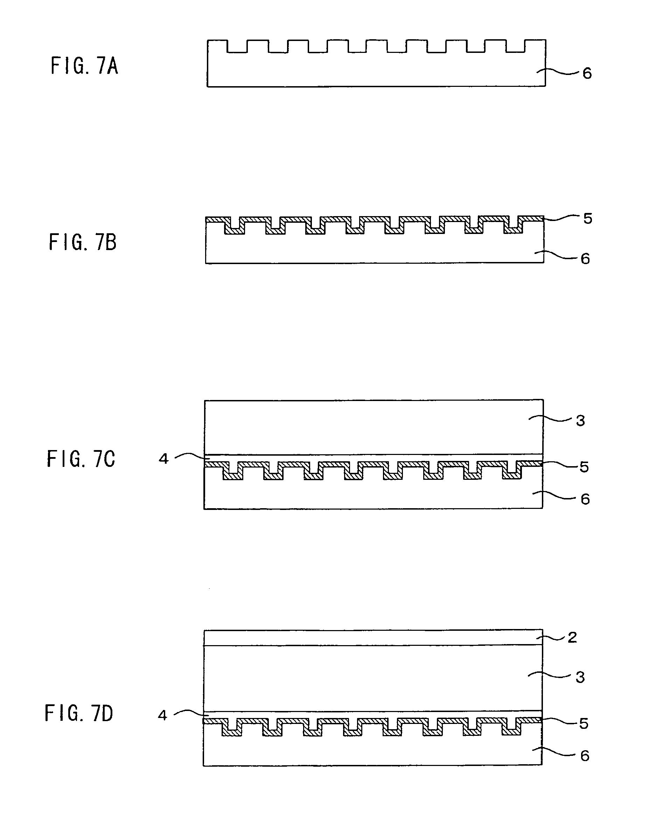

FIGs. 7A to 7D are diagrams for explaining a method of producing the bulk-type recording medium 1. Processes of producing the bulk-type recording medium 1 are roughly divided into a substrate generation process (FIG. 7A), a reflection-film forming process (FIG. 7B), a recording-layer adhesion process (FIG. 7C), and a cover-layer laminating process (FIG. 7D).

First, in the substrate generation process of FIG. 7A, the substrate 6 in which the guiding groove is formed is generated. In other words, there is generated the substrate 6 having one surface provided with a corrugated cross-sectional shape so that the position guiding element is formed in the reflection film 5. As mentioned earlier, the substrate 6 is generated by subjecting the resin serving as the formation material to the injection molding with the stamper.

In the reflection-film forming process of FIG. 7B, the reflection film 5 is formed on the surface of the substrate 6 generated in the substrate generation process described above, on which the guiding groove is formed. In other words, in the case of the present example, the reflection film 5 is formed by using the metallic material containing any of silver, copper, or gold as the main component, or the alloy material described above. At the time, the film formation is performed by, for example, sputtering, vapor deposition, or the like.

In the recording-layer adhesion process of FIG. 7C, a recording material to serve as the bulk layer 3 is adhered onto the reflection film 5 by using an adhesive material. In this case, as the recording material of the bulk layer 3, for example, a material processed beforehand to take the shape of a film (a film-shaped recording material) is used. As described earlier, in the case of the present example, the recording material contains the resin as a main component. The film-shaped recording material mentioned above is punched to have the shape of a disc and is adhered onto the reflection film 5 by using a required adhesive material. As the adhesive material, for example, a PSA (Pressure Sensitive Adhesive) is used. When the PSA is used, the PSA is mounted on the reflection film 5, and a pressure treatment is performed in a state in which the bulk layer 3 is further mounted on the PSA, and thereby the reflection film 5 and the bulk layer 3 are adhered to each other. This forms a structure having the bulk layer 3, the adhesive layer 4, the reflection film 5, and the substrate 6 which are layered as illustrated.

It is to be noted that a UV curable resin may also be used for the adhesion of the bulk layer 3. In that case, the UV curable resin is applied onto the reflection film 5 by, for example, spin coating or the like and then, a hardening treatment is applied using ultraviolet irradiation, and thereby the reflection film 5 and the bulk layer 3 are adhered to each other.

In the cover-layer laminating process of FIG. 7D, the cover layer 2 is laminated on the bulk layer 3. In the case of the present example, a UV curable resin (for example, a UV resin) is used as a material of the cover layer 2. Therefore, in the cover-layer laminating process of this case, the UV curable resin is applied onto the bulk layer 3 by, for example, spin coating or the like and then, a hardening treatment is performed using ultraviolet irradiation, and thereby the cover layer 2 is laminated.

The bulk-type recording medium 1 illustrated in FIG. 1 is completed by the processes described above.

### (2. Configuration of Recording Device)

### (2-1. Configuration of Optical System)

FIG. 8 is a diagram for explaining mainly a configuration of an optical system provided in the recording device performing recording/reproduction on the bulk-type recording medium 1 according to the embodiment. The recording device of the embodiment has a reproduction function in addition to a recording function for the bulk-type recording medium 1. In this respect, the recording device of the embodiment will be hereinafter referred to as the recording/reproducing device 10. FIG. 8 illustrates mainly an internal configuration of an optical pickup OP provided in the recording/reproducing device 10.

In FIG. 8, the bulk-type recording medium 1 loaded into the recording/reproducing device 10 is set so that its center hole is clamped at a predetermined position in the recording/reproducing device 10, and maintained in a state in which rotation driving by a spindle motor not illustrated is allowed. The optical pickup OP is provided to apply the recording/reproducing laser beam and the servo laser beam to the bulk-type recording medium 1 being driven to rotate by the above-mentioned spindle motor.

In the optical pickup OP, there are provided a recording/reproducing laser 11 that is a light source of the recording/reproducing laser beam to perform recording of information by a mark and reproduction of the information recorded by the mark, and a servo laser 24 that is a light source of the servo laser beam to perform the position control using the position guiding element formed in the reference surface Ref. Here, as described above, the recording/reproducing laser beam and the servo laser beam are different from each other in wavelength. In other words, in this case, the wavelength of the recording/reproducing laser beam is approximately 400 nm (so-called bluish-purple laser beam), and the wavelength of the servo laser beam is approximately 650 nm (red laser beam).

Further, in the optical pickup OP, there is provided an objective lens 20 that is an output end of the recording/reproducing laser beam and the servo laser beam toward the bulk-type recording medium 1. Furthermore, there are provided a recording/reproducing light receiving section 23 to receive the reflected light of the recording/reproducing laser beam from the bulk-type recording medium 1, and a servo-light receiving section 29 to receive the reflected light of the servo laser beam from the bulk-type recording medium 1.

In the optical pickup OP, an optical system is formed so that the recording/reproducing laser beam emitted from the recording/reproducing laser 11 is guided to the objective lens 20, and the reflected light of the recording/reproducing laser beam which is incident on the objective lens 20 and reflected from the bulk-type recording medium 1 is guided to the recording/reproducing light receiving section 23.

Specifically, the recording/reproducing laser beam emitted from the recording/reproducing laser 11 is made to become parallel rays via a collimation lens 12 and then enters a polarization beam splitter 13. The polarization beam splitter 13 is configured to allow the recording/reproducing laser beam thus entering from the recording/reproducing laser 11 side to pass therethrough.

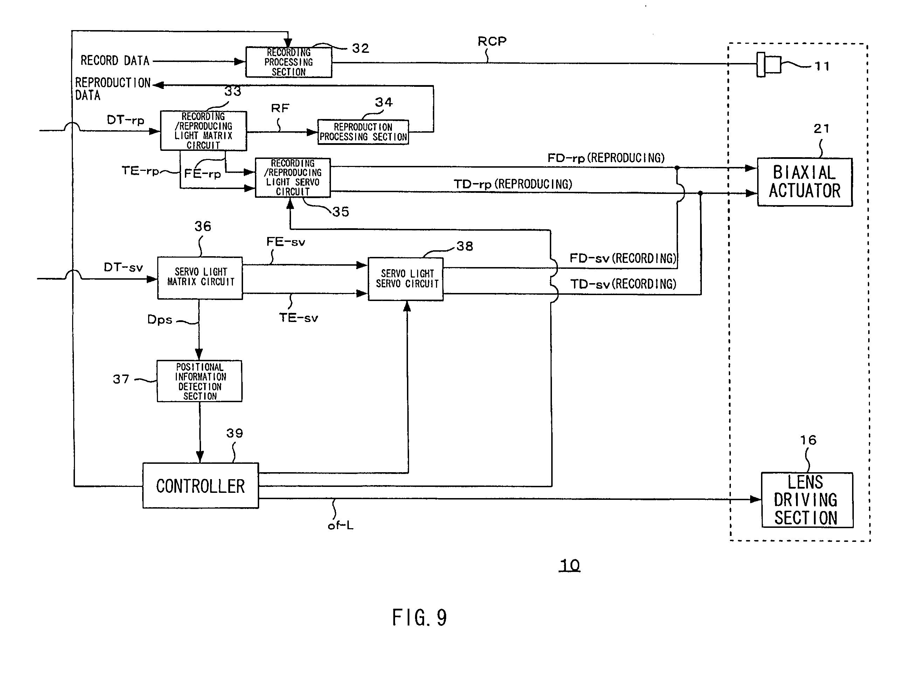

The recording/reproducing laser beam after passing through the polarization beam splitter 13 enters an expander including the fixed lens 14, the movable lens 15, and the lens driving section 16. This expander is equivalent to the recording/reproducing light focus mechanism described above, and configured such that the fixed lens 14 is provided on a side closer to the recording/reproducing laser 11 serving as the light source, the movable lens 15 is disposed on a side far from the recording/reproducing laser 11, and the movable lens 15 is driven by the lens driving section 16 in a direction parallel with an optical axis of the recording/reproducing laser beam. This recording/reproducing light focus mechanism makes it possible to perform independent focus control for the recording/reproducing laser beam. As will be described later, the lens driving section 16 in the recording/reproducing light focus mechanism is driven by the controller 39 illustrated in FIG. 9, according to the value of the offset of-L set corresponding to the targeted information recording layer position L.

The recording/reproducing laser beam passing through the fixed lens 14 and the movable lens 15 of the recording/reproducing light focus mechanism is reflected by a mirror 17 as illustrated, and then enters a dichroic prism 19 via a quarter-wave plate 18. The dichroic prism 19 is configured to have a selective reflection surface that reflects light in the same wavelength range as that of the recording/reproducing laser beam and allows light of other wavelengths to pass therethrough. Therefore, the recording/reproducing laser beam entering as described above is reflected by the dichroic prism 19.

The recording/reproducing laser beam reflected by the dichroic prism 19 is applied to the bulk-type recording medium 1 via the objective lens 20 as illustrated. For the objective lens 20, there is provided a biaxial actuator 21 that holds the objective lens 20 to be displaceable in a focus direction (a direction of contacting/leaving the bulk-type recording medium 1) and a tracking direction (a direction orthogonal to the focus direction: a radial direction of the bulk-type recording medium 1). The biaxial actuator 21 includes a focus coil and a tracking coil which are respectively given driving signals (driving signals FD and TD to be described later) to thereby displace the objective lens 20 in the focus direction and the tracking direction, respectively.

Here, at the time of reproduction, the reflected light of the recording/reproducing laser beam is obtained from the bulk-type recording medium 1 (a mark train recorded in the information recording layer L targeted for reproduction in the bulk layer 3) in response to application of the recording/reproducing laser beam to the bulk-type recording medium 1 as described above. The reflected light of the recording/reproducing laser beam thus obtained is guided to the dichroic prism 19 via the objective lens 20, and reflected by the dichroic prism 19. The reflected light of recording/reproducing laser beam reflected by the dichroic prism 19 enters the polarization beam splitter 13, after passing through the quarter-wave plate 18 → the mirror 17 → the recording/reproducing light focus mechanism (the movable lens 15 → the fixed lens 14).

Here, the reflected light of the recording/reproducing laser beam (returning light) entering the polarization beam splitter 13 in this way is made to be different 90 degrees in term of polarization direction from the recording/reproducing laser beam (outward light) entering the polarization beam splitter 13 from the recording/reproducing laser beam 11 side, by the action based on the quarter-wave plate 18 and the action at the time of reflection by the bulk-type recording medium 1. As a result, the reflected light of the recording/reproducing laser beam entering as described above is reflected by the polarization beam splitter 13.

The reflected light of the recording/reproducing laser beam thus reflected by the polarization beam splitter 13 is concentrated on a light receiving surface of the recording/reproducing light receiving section 23 via a condenser lens 22.

Furthermore, in the optical pickup OP, in addition to the above-described configuration of the optical system for the recording/reproducing laser beam, there is formed an optical system to guide the servo laser beam emitted from the servo laser 24 toward the objective lens 20 as well as to guide the reflected light of the servo laser beam entering the objective lens 20 from the bulk-type recording medium 1 toward the servo-light receiving section 29. As illustrated, the servo laser beam emitted from the servo laser 24 is made to become parallel rays via a collimation lens 25 and then enters a polarization beam splitter 26. The polarization beam splitter 26 is configured to allow the servo laser beam entering from the laser 24 side in this way (outward light) to pass therethrough.

The servo laser beam after passing through the polarization beam splitter 26 enters the dichroic prism 19 through a quarter-wave plate 27. As described earlier, the dichroic prism 19 is configured to reflect the light in the same wavelength range as that of the recording/reproducing laser beam and allow the light of other wavelengths to pass therethrough. Therefore, the servo laser beam passes through the dichroic prism 19 and is applied to the bulk-type recording medium 1 via the objective lens 20.

Moreover, the reflected light of the servo laser beam (the reflected light from the reference surface Ref) obtained in response to application of the servo laser beam to the bulk-type recording medium 1 in this way passes through the dichroic prism 19 via the objective lens 20, and enters the polarization beam splitter 26 via the quarter-wave plate 27. In a manner similar to the case of the recording/reproducing laser beam described above, the reflected light of the servo laser beam thus entering from the bulk-type recording medium 1 side (returning light) is made to be different 90 degrees in term of polarization direction from the outward light by the action of the quarter-wave plate 27 and the action at the time of reflection by the bulk-type recording medium 1. Therefore, the reflected light of the servo laser beam as the returning light is reflected by the polarization beam splitter 26.

The reflected light of the servo laser beam reflected by the polarization beam splitter 26 is concentrated on a light receiving surface of the servo-light receiving section 29 via a condenser lens 28.

It is to be noted that although illustration is omitted, the recording/reproducing device 10 is actually provided with a slide driving section that drives and thereby causes the entire optical pickup OP described above to slide in the tracking direction, and the driving of the optical pickup OP by the slide driving section makes it possible to displace the irradiation position of the laser beam in a wide range.

Here, as described above, in the bulk-type recording medium 1 of the present embodiment, the reference surface Ref is provided on the lower layer side of the bulk layer 3. Therefore, at the time of recording, focus servo control of the objective lens 20 is performed to focus the servo laser beam on the reference surface Ref thus provided on the lower layer side of the bulk layer 3, and at the same time, collimation of the recording/reproducing laser beam entering the objective lens 20 is adjusted by the recording/reproducing light focus mechanism to focus the recording/reproducing laser beam in the bulk layer 3 on the upper layer side above the reference surface Ref.

However, at the time, depending on the configuration of the optical system, there is a case in which it is difficult to locate the focal position of the recording/reproducing laser beam on the upper layer side above the reference surface Ref, even when the collimation of the recording/reproducing laser beam is changed by the recording/reproducing light focus mechanism. Specifically, as for the ordinary bulk-type recording medium 100, the reference surface Ref is provided on the upper layer side of the bulk layer 3 (102). Therefore, in a recording/reproducing device supporting this medium, an optical system will be designed so that in the focus servo controlled state at the time of recording as described above, namely, in a state in which the objective lens 20 is located at a position to make the focal position of the servo laser beam agree with the reference surface Ref, the focal position of the recording/reproducing laser beam when the movable lens 15 of the recording/reproducing light focus mechanism is at a neutral position (for example, an intermediate position within a movable range) is to be located on the lower layer side below the reference surface Ref. However, when such an optical system configuration is used as it is, there is a possibility that for the bulk-type recording medium 1 in which the reference surface Ref is on the lower layer side of the bulk layer 3, the recording/reproducing laser beam may not be focused on the information recording layer position L in the bulk layer 3 (because a range in which the focal position of the recording/reproducing laser beam is adjustable by the recording/reproducing light focus mechanism is limited).

Therefore, in the recording/reproducing device 10 of the present embodiment, it is assumed that the optical system is designed so that in a state in which the movable lens 15 of the recording/reproducing light focus mechanism is at a neutral position, and the objective lens 20 is at a position to make the focal position of the servo laser beam agree with the reference surface Ref, the focal position of the recording/reproducing laser beam applied via the objective lens 20 is to be located on the upper layer side above the reference surface Ref (for example, located in an approximately middle in the depth direction of the bulk layer 3). This makes it possible to focus the recording/reproducing laser beam in the bulk layer 3 on the upper layer side above the reference surface Ref, without greatly moving the position of the movable lens 15 in the recording/reproducing light focus mechanism (i.e., without greatly changing the collimation of the recording/reproducing laser beam).

Here, that when a change in collimation state by the recording/reproducing light focus mechanism is small, an amount of change in optical magnification is also small. Thus, there is achieved suppression of a gap between the focal position of the servo laser beam and the focal position of the recording/reproducing laser beam, which is caused by a change (in the focus direction and the tracking direction) in the position of the objective lens 20. In other words, as a result, an improvement in the position control precision for the recording/reproducing laser beam is achieved.

### (2-2. Overall Internal Configuration of Recording Device)

FIG. 9 illustrates an overall internal configuration of the recording/reproducing device 10. It is to be noted that in FIG. 9, as for an internal configuration of the optical pickup OP, only the recording/reproducing laser 11, the lens driving section 16, and the biaxial actuator 21 among the configuration illustrated in FIG. 8 are extracted and illustrated.

First, the recording/reproducing device 10 is provided with a recording processing section 32, a recording/reproducing light matrix circuit 33, and a reproduction processing section 34 in the figure, as part of a configuration of a signal processing system to perform recording/reproduction targeting the bulk layer 3, and focus/tracking control of the objective lens 20 at the time of reproduction of the recorded mark (i.e., the position control based on the reflected light of the recording/reproducing laser beam).

Data to be recorded (record data) in the bulk-type recording medium 1 is input into the recording processing section 32. The recording processing section 32 performs, for example, application of an error correction code or predetermined recording modulation coding to the inputted record data, thereby obtaining a recording modulation data sequence actually to be recorded in the bulk-type recording medium 1, which is, for example, a binary data sequence of "0" and "1". The recording processing section 32 generates a recording pulse signal RCP according to the recording modulation data sequence generated as described above. The recording processing section 32 then performs driving of emission of the recording/reproducing laser 11 in the optical pickup OP, based on the recording pulse signal RCP.

The recording/reproducing light matrix circuit 33 includes a current-voltage conversion circuit, a matrix computing/amplifying circuit, and the like, corresponding to a light-receiving signal DT-rp (output current) from more than one light receiving element serving as the recording/reproducing light receiving section 23 illustrated in FIG. 8, and generates a reqired signal by matrix computing processing. Specifically, the recording/reproducing light matrix circuit 33 generates a high frequency signal (hereinafter referred to as a reproduction signal RF) equivalent to a reproduction signal that has reproduced the above-described recording modulation data sequence, a focus error signal FE-rp for focus servo control, and a tracking error signal TE-rp for tracking servo control.

The reproduction signal RF generated in the recording/reproducing light matrix circuit 33 is supplied to the reproduction processing section 34. Further, the focus error signal FE-rp and the tracking error signal TE-rp are supplied to a recording/reproducing light servo circuit 35.

For the reproduction signal RF, the reproduction processing section 34 performs reproduction processing to restore the above-described record data, such as decoding of recording modulation code and error correction processing, thereby obtaining the reproduced data by which the record data is reproduced.

Further, the recording/reproducing light servo circuit 35 generates a focus servo signal FS-rp and a tracking servo signal TS-rp based on the focus error signal FE-rp and the tracking error signal TE-rp supplied from the recording/reproducing light matrix circuit 33, respectively. Furthermore, the recording/reproducing light servo circuit 35 drives the focus coil and the tracking coil of the biaxial actuator 21, on the basis of a focus driving signal FD-rp and a tracking driving signal TD-rp based on these focus servo signal FS-rp and tracking servo signal TS-rp, thereby performing the focus servo control and the tracking servo control for the recording/reproducing laser beam. As recognized from the earlier description, such servo control of the biaxial actuator 21 (the objective lens 20) based on the reflected light of the recording/reproducing laser beam is performed at the time of reproduction.

In addition, the recording/reproducing light servo circuit 35 realizes track-jump operation by closing a tracking servo loop and giving a jump pulse to the tracking coil in response to an instruction provided from the controller 39 corresponding to the time of reproduction, and also performs settling control and the like of tracking servo at the time of reproduction. Moreover, the recording/reproducing light servo circuit 35 also performs settling control and the like of focus servo at the time of reproduction.

Further, in the recording/reproducing device 10, there are provided a servo-light matrix circuit 36, a positional-information detecting section 37, and a servo-light servo circuit 38, as a signal processing system for the reflected light of the servo laser beam.

The servo-light matrix circuit 36 includes a current-voltage conversion circuit and a matrix computing/amplifying circuit corresponding to a light receiving signal DT-sv (output current) from more than one light receiving element in the servo-light receiving section 29 illustrated in FIG. 8, and generates a required signal by matrix computing processing. Specifically, the servo-light matrix circuit 36 generates a focus error signal FE-sv for focus servo control and a tracking error signal TE-sv for tracking servo control. In addition, the servo-light matrix circuit 36 generates a positional-information detection signal Dps to detect absolute position information recorded in the reference surface Ref. For example, the servo-light matrix circuit 36 generates a sum signal as the positional-information detection signal Dps, when the absolute position information is recorded by a pit train. Alternatively, the servo-light matrix circuit 36 generates a push-pull signal as the positional-information detection signal Dps, when the absolute position information is recorded by a wobbling groove.

The positional-information detection signal Dps is supplied to the positional-information detecting section 37. The positional-information detecting section 37 detects the absolute position information recorded in the reference surface Ref based on the positional-information detection signal Dps. The detected absolute position information is supplied to the controller 39.

The focus error signal FE-sv and the tracking error signal TE-sv generated in the servo-light matrix circuit 36 are supplied to the servo-light servo circuit 38. The servo-light servo circuit 38 generates a focus servo signal FS-sv and a tracking servo signal TS-sv based on these focus error signal FE-sv and tracking error signal TE-sv, respectively. Subsequently, at the time of recording, the servo-light servo circuit 38 drives the focus coil and the tracking coil of the biaxial actuator 21 on the basis of a focus driving signal FD-sv and a tracking driving signal TD-sv generated based on the focus servo signal FS-sv and the tracking servo signal TS-sv, in response to an instruction from the controller 39, thereby realizing the focus servo control and the tracking servo control for the servo laser beam.

Further, the servo-light servo circuit 38 realizes track-jump operation by closing a tracking servo loop and giving a jump pulse to the tracking coil in response to an instruction provided from the controller 39 corresponding to the time of recording, and also performs settling control and the like of focus servo with respect to the reference surface Ref.

The controller 39 is configured by using, for example, a microcomputer with memory (storage device) such as a CPU (Central Processing Unit), a ROM (Read Only Memory), and a RAM (Random Access Memory), and controls the entire recording/reproducing device 10 by carrying out control and processing in accordance with, for example, a program stored in the above-described ROM and the like. For example, the controller 39 performs control (setting) of the focal position of the recording/reproducing laser beam, based on the value of the offset of-L set beforehand corresponding to each of the information recording layer positions L as described above. Specifically, the controller 39 selects the record position in the depth direction, by driving the lens driving section 16 in the optical pickup OP, based on the value of the offset of-L set corresponding to the information recording layer position L targeted for recording.

In addition, the controller 39 also performs control to realize servo-control switching of the objective lens 20 at the time of recording/reproduction as described earlier. Specifically, at the time of recording, the controller 39 instructs the servo-light servo circuit 38 to output the focus driving signal FD-sv and the tracking driving signal TD-sv, and also instructs the recording/reproducing light servo circuit 35 to stop outputting the focus driving signal FD-rp and the tracking driving signal TD-rp. In addition, at the time of recording, the controller 39 provides an instruction to the recording processing section, thereby causing execution of mark recording based on the record data.

On the other hand, at the time of reproduction, the controller 39 instructs the recording/reproducing light servo circuit 35 to output the focus driving signal FD-rp and the tracking driving signal TD-rp, and also instructs the servo-light servo circuit 38 to stop outputting the focus driving signal FD-sv and the tracking driving signal TD-sv.

The controller 39 also performs seek operation control for the servo-light servo circuit 38. In other words, the controller 39 instructs the servo-light servo circuit 38 to move the spot position of the servo laser beam to a predetermined target address on the reference surface Ref.

According to the recording/reproducing device 10 configured as described above, it is possible to record a mark in a predetermined position (in the focus direction and the tracking direction) in the bulk layer 3, while supporting the bulk-type recording medium 1 in which the reflection film 5 (the reference surface Ref) is formed on the lower layer side of the bulk layer 3. (3. Discussion of Distance from Lowermost Information Recording Layer Position to Reference Surface, and Reflection Ratio)

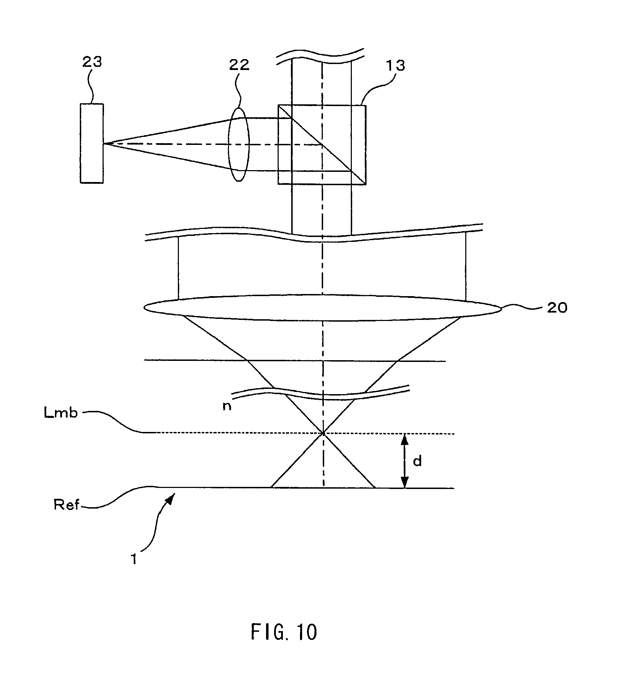

FIG. 10 illustrates a state in which the recording/reproducing laser beam is applied via the objective lens 20 to focus on the information recording layer position L (hereinafter referred to as a lowermost information recording layer position Lmb) set in the lowermost layer side of the bulk-type recording medium 1, and the reflected light of the recording/reproducing laser beam obtained from the bulk-type recording medium 1 according to the irradiation is guided to the light receiving section (the recording/reproducing light receiving section 23). It is to be noted that FIG. 10 illustrates an enlarged part in which the lowermost information recording layer position Lmb is irradiated with the recording/reproducing laser beam via the objective lens 20. Further, in FIG. 10, the optical system of the recording/reproducing laser beam is illustrated by omitting each part (for example, the dichroic prism 19, the recording/reproducing light focus mechanism, and the like) between the objective lens 20 and the polarization beam splitter 13, and the recording/reproducing laser 11 as well as the collimation lens 12.

At the time of reproduction, when the recording/reproducing laser beam is irradiated to be focused on the information recording layer position L in order to reproduce information recorded in the required information recording layer position L, the reflected light from the reference surface Ref is obtained together with the reflected light from the mark. As apparent from the figure, the reflected light from the reference surface Ref at this moment becomes the reflected light of light applied in a state of diffused light, after focusing on the information recording layer position L.

Such reflected light of the recording/reproducing laser beam from the reference surface Ref is received by the recording/reproducing light receiving section 23 together with the reflected light from the mark (namely, reproducing light). In other words, the reflected light from the reference surface Ref will act as noise light for the reproducing light. In the following, such reflected light of the recording/reproducing laser beam from the reference surface Ref will also be referred to as the stray light.

At this moment, the intensity of the stray light from the reference surface Ref is maximum when the distance from the information recording layer position L targeted for reproduction to the reference surface Ref is minimum. In other words, the amount of superimposition of noise is maximum at the time of reproduction for the lowermost information recording layer position Lmb. As apparent also from this respect, when an influence of the noise by the stray light is considered, the distance (hereinafter expressed as a distance d) from the lowermost information recording layer position Lmb to the reference surface Ref is an important factor.

In addition, as a matter of course, the intensity of the stray light also changes depending on the reflectance of the reference surface Ref for the recording/reproducing laser beam (synonymous with the above-mentioned reflectance Rrp: hereinafter also expressed as a reflectance Rrr). Therefore, it is desirable that the reflectance Rrr be small in order to suppress the intensity of the stray light and suppress the influence of the superimposition of the noise.

Meanwhile, the influence of the noise is relative to the intensity of the reproducing light and thus, as a matter of course, when the influence of the noise is considered, it is required to also take the reflectance of the mark (hereinafter also expressed as a reflectance Rmr) into consideration.

In this way, when the influence of the noise by the stray light is considered, all three of the distance d, the reflectance Rrr of the reference surface Ref, and the reflectance Rmr of the mark are important factors.

Here, in estimating the influence of the noise by the stray light, "stray light intensity/reproduction light intensity" is assumed to be a evaluation index of a SNR correlation. In the bulk-type recording medium 1, a pattern formed on the reference surface Ref changes at a relatively low frequency and thus, the stray light is superimposed on the reproduction signal from the bulk layer 3 as a DC offset. Therefore, it is possible to regard the "stray light intensity/reproduction light intensity" as the evaluation index of the SNR correlation as mentioned above. Based on this premise, for a noise/reproducing light intensity ratio acceptable in the system, "stray light intensity/reproduction light intensity ≤ α" is assumed. In this case, the reflectance Rrr of the reference surface Ref, the reflectance Rmr of the mark, and the distance d may be set to meet the condition of the "stray light intensity/reproduction light intensity ≤α".

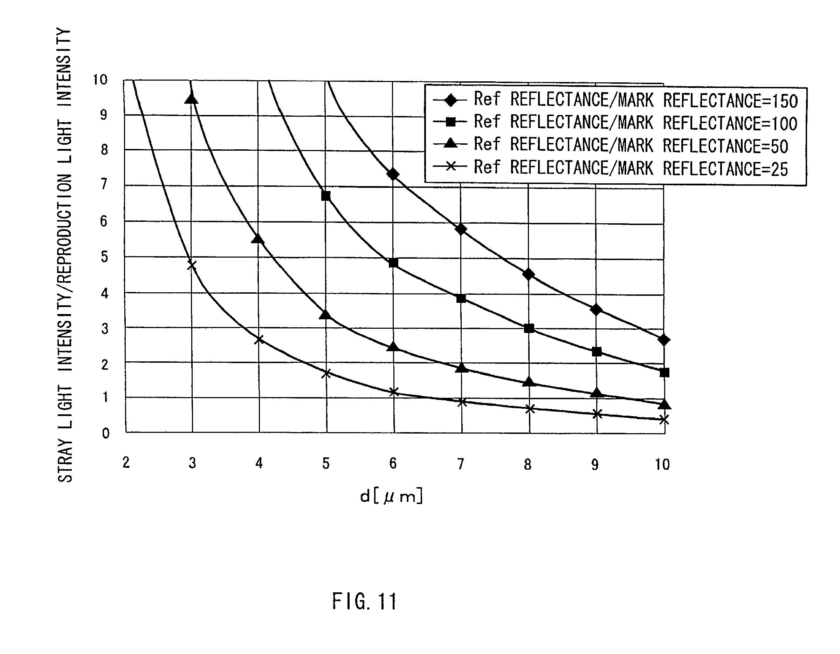

FIG. 11 illustrates a result of calculating a variation characteristic of "the stray light intensity/reproduction light intensity" for the distance d from the lowermost information recording layer position Lmb to the reference surface Ref, for every reflectance ratio between the reflectance Rrr of the reference surface Ref and the reflectance Rmr of the mark. Specifically, FIG. 11 illustrates the result of calculating the variation characteristic of "the stray light intensity/reproduction light intensity" for the distance d, for every reflectance ratio (Ref reflectance/mark reflectance = 25,50,100,150) between the reflectance Rrr of the reference surface Ref and the reflectance Rmr of the mark, assuming a vertical axis to be the "stray light intensity/reproduction light intensity" and a horizontal axis to be d (1 to 10 µm). The result of calculating the Ref reflectance/mark reflectance = 25 is indicated with crosses, the result of calculating the Ref reflectance/mark reflectance = 50 is indicated with solid-filled triangles, the result of calculating the Ref reflectance/mark reflectance = 100 is indicated with solid-filled squares, and the result of calculating the Ref reflectance/mark reflectance = 150 is indicated with solid-filled diamonds.

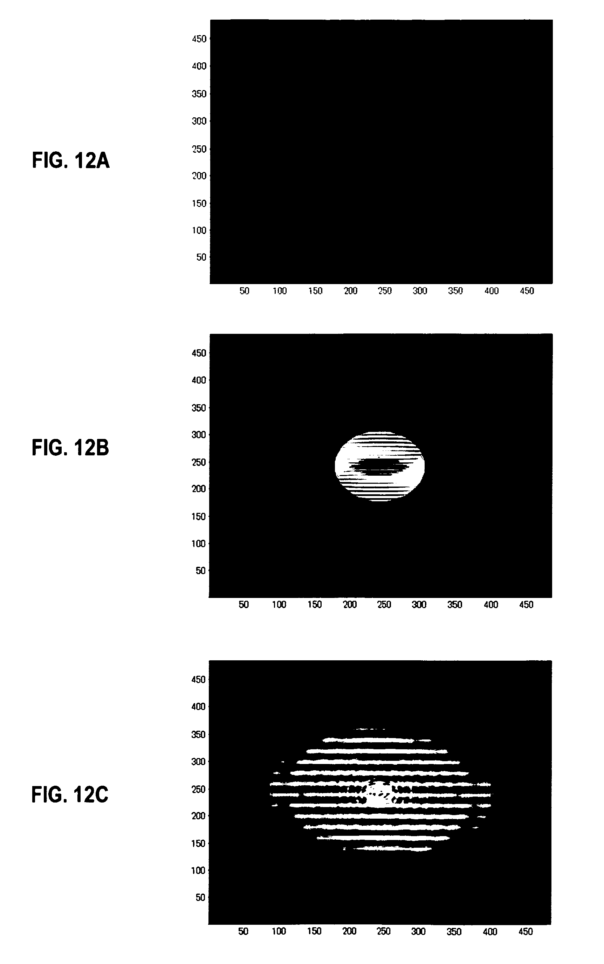

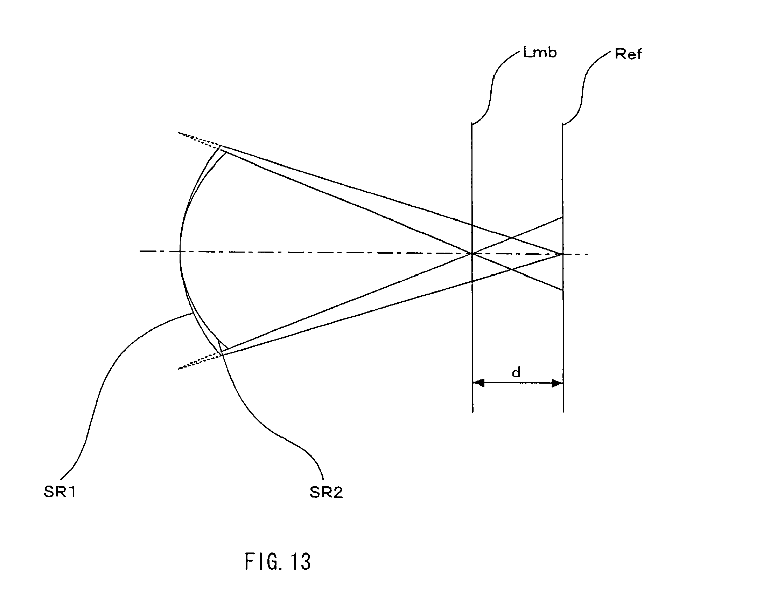

It is to be noted that in obtaining the results of calculation illustrated in FIG. 11, as the pattern of the reference surface Ref (the pattern of the position guiding element), a pattern of repeated grooves and lands (an intensity distribution pattern) as illustrated in FIG. 12A is set. In addition, the calculation is performed assuming that there occurs a difference between a spherical surface of the reflected light from the lowermost information recording layer position Lmb and a spherical surface of the reflected light from the reference surface Ref, such as a difference between a reference spherical surface SR1 at the time of focusing and a reference spherical surface SR2 at the time of defocusing as illustrated in FIG. 13. Furthermore, based on this premise, the calculation is performed assuming that an intensity distribution pattern on an outgoing surface from the objective lens 20 for the reflected light (including the reflected light from the reference surface Ref) of the recording/reproducing laser beam from the bulk-type recording medium 1 is as illustrated FIG. 12B and moreover, an intensity distribution pattern on the light receiving surface of the recording/reproducing light receiving section 23 for the reflected light of the recording/reproducing laser beam is as illustrated in FIG. 12C. It is to be noted that the calculation is carried out assuming that the wavelength of the recording/reproducing laser beam λ is 400 nm, and a numerical aperture NA of the objective lens 20 is 0.85.

It is possible to derive a relationship preferable in design between the distance d and the Ref reflectance/mark reflectance, based on the results of calculation in FIG. 11. For example, it is found that in a case in which an acceptable value of the "stray light intensity/reproduction light intensity" described above is assumed to be α = 1, if the Ref reflectance/mark reflectance is 50, the distance d may be approximately 10 µm or more. Alternatively, it is found that in a case in which the Ref reflectance/mark reflectance is assumed to be 100, 150, or the like under the same condition of α = 1, the distance d is required to be larger. It is to be noted for confirmation that the Ref reflectance (the reflectance Rrr) is determined by the material, film thickness, or the like of the reflection film 5. In addition, the mark reflectance (the reflectance Rmr) is determined by, for example, what kind of material (a recording material) is selected for the bulk layer 3.

### (4. Modifications)

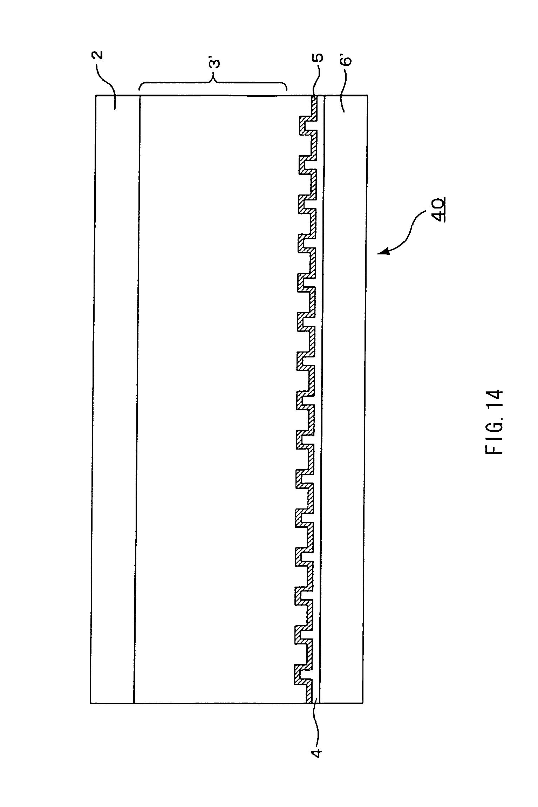

Up to this point, the embodiment of the present technology has been described, but the present technology is not limited to the specific examples described above. For instance, the case in which the guiding groove is formed on the top surface of the substrate 6 has been described above as an example, but like a bulk-type recording medium 40 illustrated in FIG. 14, a structure in which a guiding groove is formed on an undersurface side of a bulk layer may be employed. It is to be noted that the bulk layer in which the guiding groove is thus formed will be expressed by a bulk layer 3'. In this case, as the substrate 6, a substrate in which a top surface side is also formed to be flat is used (hereinafter expressed as a substrate 6'), by supporting the formation of the guiding groove (and a reflection film 5) on the bulk layer side as described above.

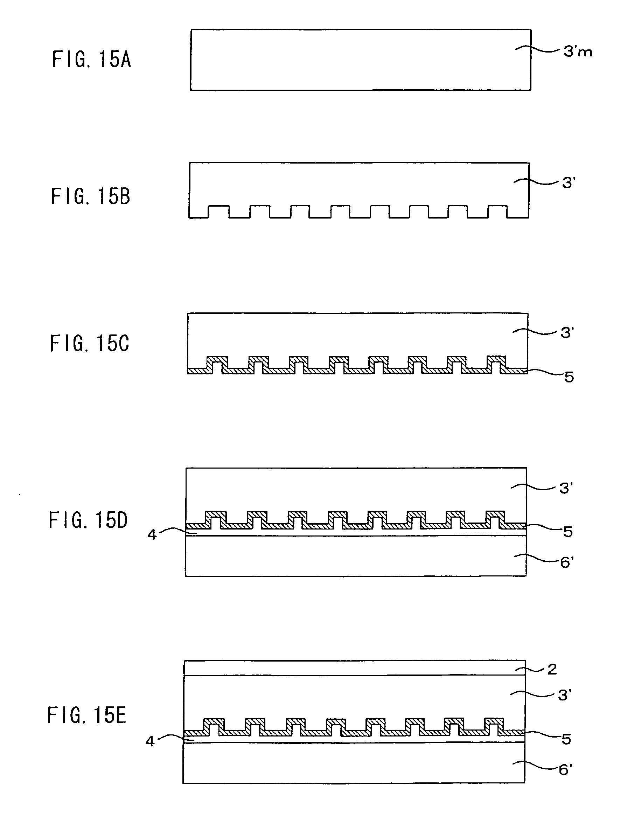

FIGs. 15A to 15E are diagrams for explaining a method of producing the bulk-type recording medium 40 illustrated in FIG. 14. In FIGs. 15A to 15E, in producing the bulk-type recording medium 40, first, a film-shaped recording material 3'm is prepared as a material of the bulk layer 3' (FIG. 15A). In other words, a film-shaped recording material formed to be in the shape of a disc by punching is prepared.

Subsequently, a guiding groove is formed in this film-shaped recording medium 3'm, and thereby the bulk layer 3' is completed (FIG. 15B). The formation of the guiding groove in the film-shaped recording material 3'm is performed using a so-called nano-printing technique. Specifically, the formation of the guiding groove is performed by, for example, a technique such as heat transfer printing.

Furthermore, on the bulk layer 3' generated in this way, the reflection film 5 is formed (FIG. 15C). In other words, on a surface on the side of the bulk layer 3' where the guiding groove is formed, a film made of a metallic material based on silver, copper, or gold is formed.

After the reflection film 5 is formed, the reflection film 5 and the substrate 6' are adhered to each other by an adhesive layer 4 made of, for example, an adhesive material such as a PSA and a UV curable resin (FIG. 15D). Further, the cover layer 2 is laminated on a top surface side of the bulk layer 3' (FIG. 15E). This completes the bulk-type recording medium 40 illustrated in FIG. 14.

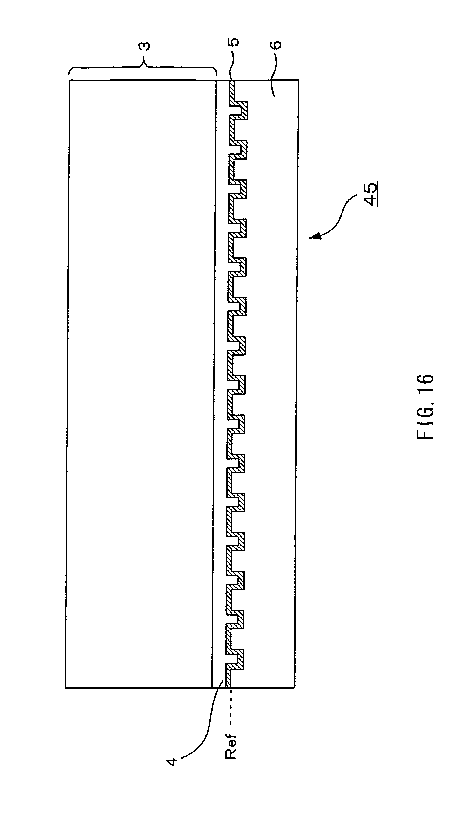

Here, in the description provided above, the structure in which the cover layer 2 is formed on the upper layer side of the bulk layer 3 (or the bulk layer 3') has been taken as an example. However, as the optical recording medium according to the embodiment of the present disclosure, a structure in which the cover layer 2 is omitted may be employed, like a bulk-type recording medium 45 illustrated in FIG. 16, for example. In this case, an upper layer part (a part on the upper layer side above the uppermost information recording layer position L) in the bulk layer 3 (or the bulk layer 3') functions as a cover layer.

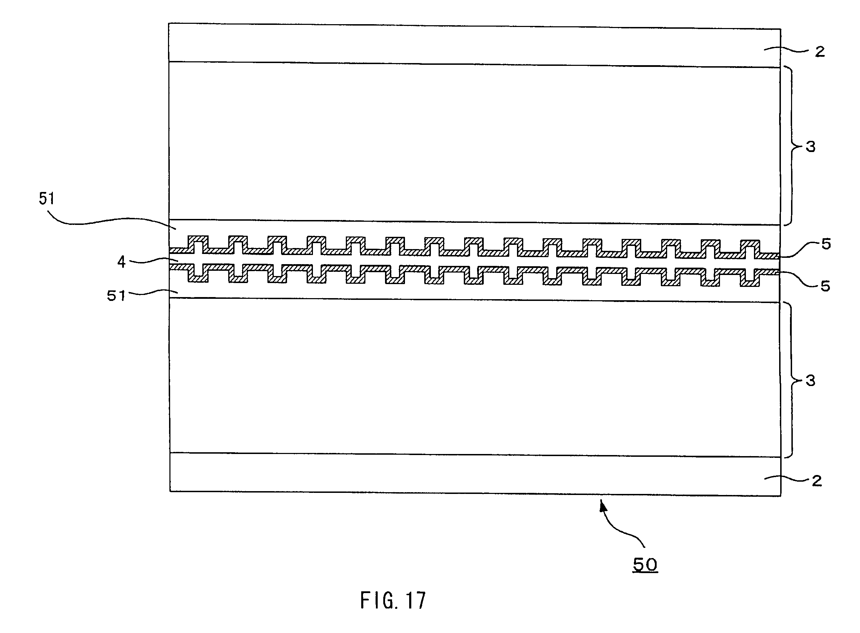

Alternatively, the optical recording medium according to the embodiment of the present disclosure may have a structure in which two layer units are adhered to each other like a bulk-type recording medium 50 illustrated in FIG. 17. Specifically, this bulk-type recording medium 50 has a structure in which two layer units each having "a cover layer 2, a bulk layer 3, a pattern transfer intermediate layer 51, and a reflection film 5" are adhered to each other while the reflection films being directed to face each other. Here, it is possible to form the pattern transfer intermediate layer 51 by, for example, subjecting a UV curable resin applied onto the bulk layer 3 to a hardening treatment based on ultraviolet irradiation in a state in which the stamper to form the guiding groove mentioned above is pressed against the UV curable resin.

It is to be noted that the optical recording medium having the bulk layer 3' as illustrated in FIG. 14 may also have a similar adhesion structure. In other words, in that case, layer units each having "the cover layer 2, the bulk layer 3', and the reflection film 5" are adhered to each other by the adhesive layer 4 while the reflection films 5 are directed to face each other .

Incidentally, it goes without saying that it is possible to omit the cover layer 2 in the case of employing the adhesion structure as well.

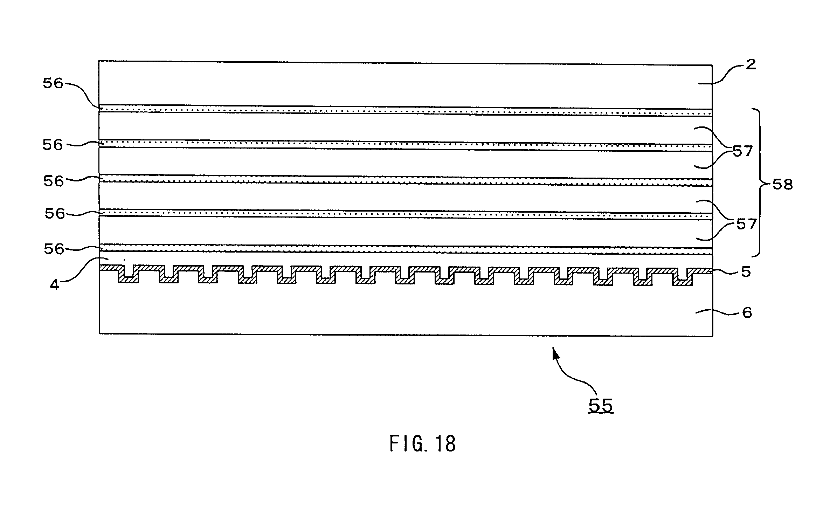

Further, in the description provided above, the case in which the optical recording medium according to the embodiment of the present disclosure is the so-called bulk-type optical recording medium has been taken as an example. However, as the optical recording medium according to the embodiment of the present disclosure, there may be employed, for example, a multi-layer recording medium 55 having a recording layer 58 provided with more than one semitransparent recording film 56 as illustrated in FIG. 18. In FIG. 18, a cover layer 2, an adhesive layer 4, a reflection film 5, and a substrate 6 are similar to those of the bulk-type recording medium 1 and thus the description will be omitted. Unlike the bulk-type recording layer serving as the bulk layer 3, the recording layer 58 of this multi-layer recording medium 55 has a multi-layered structure in which two or more semitransparent recording films 56 between which an intermediate layer 57 is interposed are formed. Specifically, repeated laminating of the semitransparent recording film 56 → the intermediate layer 57 → the semitransparent recording film 56 → the intermediate layer 57 ... is performed. However, what is to be noted here is that a position guiding element accompanying the formation of a groove, a pit train, or the like is not formed in the semitransparent recording film 56. In other words, in this multi-layer recording medium 55, the position guiding element is formed only for one layer position serving as a reference surface Ref. Such a structure makes it possible to omit a process of forming the position guiding element for each layer, like in the case of the bulk-type optical recording medium, and thus is advantageous in suppressing the cost of producing the recording medium by this omission.

Here, in the multi-layer recording medium 55 illustrated in FIG. 18, the semitransparent recording film 56 is formed and thus, it is possible to obtain the reflected light of a recording/reproducing laser beam at the time of recording as well. Therefore, focus servo control of the recording/reproducing laser beam at the time of recording in this case is performed by driving an objective lens 20 based on the reflected light of the recording/reproducing laser beam, thereby achieving a focus on the semitransparent recording film 56 targeted for recording. On the other hand, tracking servo control of the recording/reproducing laser beam at the time of recording is performed by using a servo laser beam in this case as well. In other words, the tracking servo control at the time of recording is performed by driving the objective lens 20 based on the reflected light of the servo laser beam from the reference surface Ref, thereby causing the focal position of the servo laser beam to follow the guiding groove of the reference surface Ref, in this case as well.

Further, at the time of reproduction, also in this case, it is possible to perform the tracking servo control of the recording/reproducing laser beam based on a mark train already recorded. Furthermore, as recognized also from the above description, it is possible to perform the focus servo control of the recording/reproducing laser beam by using the reflected light from the targeted semitransparent recording film 56 (information recording layer L), at the time of reproduction as well. In other words, in this case, servo control at the time of reproduction is performed by a technique similar to that in the case of the bulk-type optical recording medium.

Here, even when the multi-layer recording medium 55 illustrated in FIG. 18 is employed, like the bulk-type optical recording medium, the multi-layer recording medium 55 is still a medium in which recording of a mark is selectively performed in a depth direction, and has the recording layer in which the mark is formed in multilayer form.

In addition, in the description provided above, the case in which the wavelength of the recording/reproducing laser beam is around 400 nm and the wavelength of the servo laser beam is around 650 nm has been taken as an example. However, the wavelengths of these beams are not limited to the numerical values in the example.

Further, in the description provided above, there has been taken as an example the case in which in the recording/reproducing device 10, the optical system is designed so that in the state in which the movable lens 15 of the recording/reproducing light focus mechanism is located at the neutral position and the objective lens 20 is located at the position allowing the focal position of the servo laser beam to agree with the reference surface Ref, the focal position of the recording/reproducing laser beam applied via the objective lens 20 is located on the upper layer side above the reference surface Ref (for example, located approximately in the middle in the depth direction of the recording layer). However, the recording device according to the embodiment of the present disclosure may be configured such that at least the servo laser beam (the second light) may be focused on the reflection film (the reflection film 5) formed on the lower layer side of the recording layer, and in this state, the recording/reproducing laser beam (the first light) may be focused on the recording layer formed on the upper layer side of the reflection film.

Furthermore, in the description provided above, the case in which the position guiding element formed in the reference surface (reflection film) is the guiding groove formed of the pits or the groove has been taken as an example. However, the position guiding element in the reference surface may be formed by mark recording. In that case, the process of forming the guiding groove may be eliminated, and instead, a process of forming a mark in the reflection film or of forming a recording material enabling the mark recording on the top surface side of the reflection film 5 and recording a mark therein may be added.

Moreover, in the description provided above, the case in which the recording device according to the embodiment of the present disclosure is applied to the recording/reproducing device performing both of recording and reproduction on the optical recording medium. However, the present technology may be suitably applied to a recording-only device (recording device) in which only recording in an optical recording medium (recording layer) is allowed.

The present disclosure contains subject matter related to that disclosed in Japanese Priority Patent Application JP 2010-234656 filed in the Japan Patent Office on October 19, 2010, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An optical recording medium comprising:
a recording layer in which recording of a mark is selectively performed in a depth direction by irradiation of first light, and the mark is formed in multilayer form;
and
a reflection film reflecting second light of a wavelength different from a wavelength of the first light, and provided on a lower layer side of the recording layer.

2. The optical recording medium according to claim 1, wherein a position guiding element is formed in the reflection film.

3. The optical recording medium according to claim 2, wherein the reflection film is made of a material containing a metal as a main component.

4. The optical recording medium according to claim 3, wherein the reflection film is configured to have a reflectance for the first light smaller than a reflectance for the second light.

5. The optical recording medium according to anyone of claims 3 or 4, wherein the reflection film is made of a material containing any of silver (Ag), copper (Cu), or gold (Au) as a main component.

6. The optical recording medium according to anyone of claims 3 to 5, wherein the reflection film is made of an alloy.

7. The optical recording medium according to claim 6, wherein the reflection film is made of an alloy of silver and copper.

8. The optical recording medium according to anyone of claims 1 to 7, wherein a cover layer is formed on an upper layer side of the recording layer.

9. The optical recording medium according to anyone of claims 1 to 8, comprising two layer units each having the recording layer and the reflection film,
wherein the layer units are adhered to each other while the respective reflection films in the two layer units being directed to face each other to have an adhesion structure.

10. The optical recording medium according to anyone of claims 2 to 9, further comprising a substrate provided with a corrugated cross-sectional shape on a top surface side thereof,
wherein the reflection film is formed on the top surface side of the substrate, and thereby the position guiding element is formed in the reflection film.

11. The optical recording medium according to anyone of claims 2 to 9, wherein a corrugated cross-sectional shape is provided on an undersurface side of the recording layer, and the position guiding element is formed in the reflection film by forming the reflection film on the undersurface side of the recording layer.

12. A method of producing an optical recording medium, the method comprising forming a reflection film on a lower layer side of a recording layer in which recording of a mark is selectively performed in a depth direction by irradiation of first light and the mark is formed in multilayer form, the reflection film reflecting second light of a wavelength different from a wavelength of the first light.

13. The method according to claim 12, further comprising:
generating a substrate provided with a corrugated cross-sectional shape to serve as a guiding groove on a top surface side thereof;
forming the reflection film on the top surface side of the substrate; and
adhering the reflection film and the recording layer to each other.

14. The method according to claim 12, further comprising:
generating the recording layer provided with a corrugated cross-sectional shape to serve as a guiding groove on an undersurface side thereof;
forming the reflection film on the undersurface side of the recording layer; and
adhering the reflection film and a substrate to each other.

15. A recording device performing recording in an optical recording medium, the optical recording medium including a recording layer in which recording of a mark is selectively performed in a depth direction by irradiation of first light, and the mark is formed in multilayer form, and a reflection film reflecting second light of a wavelength different from a wavelength of the first light, and provided on a lower layer side of the recording layer, the recording device comprising:
an objective lens upon which the first light and the second light are incident and which irradiate the optical recording medium with both the first light and the second light;
an objective-lens focus mechanism driving the objective lens in a focus direction;
a focal-position independent adjustment mechanism changing a collimation state of the first light incident upon the objective lens, thereby changing a focal position of the first light independently of that of the second light;
a focus-servo control section driving the objective-lens focus mechanism based on a focus error signal obtained by receiving reflected light of the second light from the reflection film, thereby performing focus servo control for the objective lens to focus the second light on the reflection film formed on the lower layer side of the recording layer; and
a control section controlling the focal-position independent adjustment mechanism to adjust the focal position of the first light to be located in a recording target layer position in the recording layer formed on an upper layer side of the reflection film, and performing control to execute mark recording by the first light.
